(19)

Europäisches
Patentamt
European
Patent Office
Office européen
des brevets

(11)  **EP 2 720 500 B1**

(12)  **EUROPEAN PATENT SPECIFICATION**

(45) Date of publication and mention
of the grant of the patent:
**11.05.2016  Bulletin 2016/19**

(21) Application number: **11867691.5**

(22) Date of filing: **13.06.2011**

(51) Int Cl.:
*H04W 56/00* (2009.01)     *H04W 74/08* (2009.01)
*H04W 72/04* (2009.01)

(86) International application number:
**PCT/JP2011/063505**

(87) International publication number:
**WO 2012/172628 (20.12.2012 Gazette 2012/51)**

(54) **MOBILE STATION DEVICE, BASE STATION DEVICE, COMMUNICATION SYSTEM, AND COMMUNICATION METHOD**

MOBILSTATION, BASISSTATION, KOMMUNIKATIONSSYSTEM UND KOMMUNIKATIONSVERFAHREN

DISPOSITIF DE STATION MOBILE, DISPOSITIF DE STATION DE BASE, SYSTÈME DE COMMUNICATION ET PROCÉDÉ DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.04.2014  Bulletin 2014/16**

(73) Proprietor: **Fujitsu Limited
Kawasaki-shi, Kanagawa 211-8588 (JP)**

(72) Inventor: **SENOO, Hiroaki
Kawasaki-shi
Kanagawa 211-8588 (JP)**

(74) Representative: **Fenlon, Christine Lesley et al
Haseltine Lake LLP
Lincoln House, 5th Floor
300 High Holborn
London WC1V 7JH (GB)**

(56) References cited:
**EP-A1- 2 037 595      EP-A1- 2 124 375
EP-A1- 2 124 473      WO-A1-2009/120462
JP-A- 2009 232 131**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The embodiments which are discussed in the Description relate to establishment of synchronization between a mobile station and a base station.

BACKGROUND

In a mobile communication system, the transmission timing at which an uplink signal is transmitted is adjusted at the mobile station side so as to avoid interference between symbols which arrive at a base station from different mobile stations.

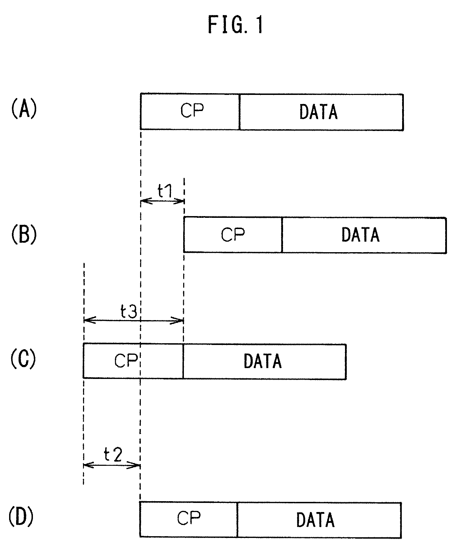

Referring to FIG. 1, (A) to (D), one example of adjustment of a correction timing amount of uplink transmission timing will be explained. FIG. 1, (A) illustrates a transmission timing of a downlink signal which is transmitted from a base station, while FIG. 1, (B) illustrates a reception timing of the downlink signal in a mobile station. Similarly, FIG. 1, (C) illustrates a transmission timing of an uplink signal which is transmitted from a mobile station, while FIG. 1(D) illustrates a reception timing of the uplink signal at the base station. The illustrated examples of the downlink signal and uplink signal include data and cyclic prefixes (CP).

The downlink signal which is transmitted from the base station is received by the mobile station after the elapse of a propagation delay t1. The uplink signal which is transmitted from the mobile station is received by the base station after the elapse of a propagation delay t2. The mobile station determines the uplink transmission timing by correcting the uplink transmission timing, which is determined based on the reception timing of the downlink signal, by the timing correction amount t3 which is calculated in accordance with the propagation delays t1 and t2.

RELATED ART LIST

Patent Document 1: Japanese Laid Open Patent Publication No. 2010-161804A
Patent Document 2: International Publication Pamphlet No. 2009/020213A1
Patent Document 3: Japanese Laid Open Patent Publication No. 2008-526094A

Non-Patent Document 1: 3GPP (3rd Generation Partnership Project) TS (Technical Specification) 36.300, V8.12.0, March 3, 2010
Non-Patent Document 2: 3GPP TS 36.321, V8.9.0, June 2010

EP 2124375 A1 discloses a wireless communication system which can reduce the probability that a latency before data transmission increases when a mobile station that is actually in sync is judged to be out of sync based on a timeout of the timer used for judging whether a mobile station is in a deemed in-sync or in a deemed out-of-sync state.

Sometimes the timing correction amount of the uplink transmission timing is determined by the base station, and the mobile station acquires the timing correction amount from the base station. As one example of such a communication system, the LTE (long-term evolution) scheme mobile communication system which is prescribed by the 3GPP may be mentioned. The timing correction amount is acquired in the cell connection processing for starting the connection to a cell, so the processing time for the cell connection processing includes the time for processing to acquire the timing correction amount.

The apparatus and method disclosed have as their object to shorten the required time for cell connection processing.

SUMMARY

A mobile station, base station, and communication system including a base station and a mobile system, as well as communication methods of a mobile station, base station and communication system including a base station and a mobile station are provided, as defined in the claims.

The object and advantages of the invention will be realized and attained by means of the elements and combinations particularly pointed out in the appended claims. It is to be understood that both the foregoing general description and the following detailed description are exemplary and explanatory only and are not restrictive of the invention as claimed, the scope of which is defined by the claims.

BRIEF DESCRIPTION OF DRAWINGS

FIG. 1 is an explanatory view of adjustment of the amount of correction timing of an uplink transmission timing.

FIG. 2 is a view which illustrates an example of the overall configuration of a communication system.

FIG. 3 is an schematic view of an outline of cell search processing and cell connection processing.

FIG. 4 is a view which illustrates one example of a hardware configuration of a base station.

FIG. 5 is a view which illustrates a first example of the configuration of a base station.

FIG. 6 is a view which illustrates an example of the configuration of a downlink signal processing unit and a downlink baseband processing unit which are illustrated in FIG. 5.

FIG. 7 is a view which illustrates one example of the configuration of an uplink baseband processing unit and uplink signal processing unit which are shown in FIG. 5.

FIG. 8 is a view which illustrates one example of a hardware configuration of a mobile station.

FIG. 9 is a view which illustrates one example of the configuration of a mobile station.

FIG. 10 is a view which illustrates one example of the configuration of a downlink signal processing unit and downlink baseband processing unit which are shown in FIG. 9.

FIG. 11 is a view which illustrates one example of the configuration of an uplink signal processing unit and uplink baseband processing unit which are shown in FIG. 9.

FIG. 12 is an explanatory view of a first example and a second example of resource information.

FIG. 13 is an explanatory view of one example of processing for judging whether a judgment condition stands.

FIG. 14 is an explanatory view of correction of an uplink transmission timing.

FIG. 15 is an explanatory view of one example of processing at a mobile station at the time of cell search processing and cell connection processing.

FIG. 16 is an explanatory view of one example of processing at a base station at the time of cell search processing and cell connection processing.

FIG. 17 is a signal sequence chart between a base station and a mobile station (part 1).

FIG. 18 is a signal sequence chart between a base station and a mobile station (part 2).

FIG. 19 is an explanatory view of a second example of a method of calculating a round-trip propagation delay time.

FIG. 20 is an explanatory view of a third example of a method of calculating a round-trip propagation delay time.

FIG. 21 is a view which illustrates a second example of the configuration of a base station.

FIG. 22 depicts a histogram of a number of mobile stations and graph of cumulative frequency distribution.

FIG. 23 is an explanatory view of variable control processing of a correction coefficient.

DESCRIPTION OF EMBODIMENTS

According to the disclosed apparatuses or methods, the time required for processing for connection to cells is shortened.

1. Configuration of Communication System

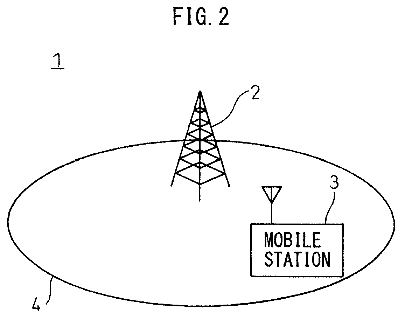

Below, preferred embodiments will be explained while referring to the attached drawings. FIG. 2 is a view illustrating an example of the overall configuration of a communication system. A communication system 1 is provided with a base station 2 and a mobile station 3. Reference numeral 4 schematically illustrates the range of a cell which is covered by the base station 2. The communication system 1 may for example be an LTE type mobile communication system. In the following explanation, an example of an embodiment according to FDD (Frequency Division Duplex) LTE wireless access technology will be illustrated. However, the cell search processing and the cell connection processing which are disclosed in the Description can also be applied to other wireless access technologies so long as wireless access technologies in which an uplink signal is provided with a cyclic prefix or other guard interval.

2. Summary of Cell Search Processing and Cell Connection Processing

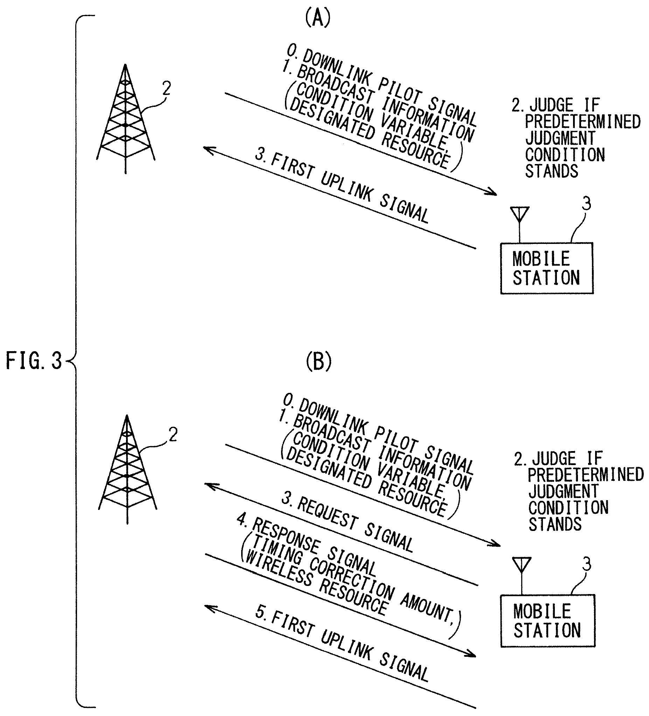

Next, the cell search processing and the cell connection processing which are disclosed in the Description will be explained in summary. FIG. 3 is a schematic view of an outline of the cell search processing and the cell connection processing. The mobile station 3 judges whether to acquire a timing correction amount of an uplink transmission timing from the base station 2 in accordance with a certain judgment condition.

The mobile station 3 does not acquire the timing correction amount from the base station 2 when the above judgment condition stands. The mobile station 3 acquire the timing correction amount from the base station 2 when the above judgment condition does not stand. In the following explanation, the judgment condition for judging whether to acquire the timing correction amount of the uplink transmission timing from the base station 2 will be referred to as the "judgment condition". The base station 2 sends the variable which is used for the judgment condition and included in broadcast information. In the following explanation, the variable which is used for the judgment condition will be referred to as the "condition variable".

In one embodiment, the judgment condition may be a condition which relates to a round-trip propagation delay time trtt which is estimated between the base station 2 and the mobile station 3. For example, the judgment condition may be a condition that stands when the round-trip propagation delay time trtt is a predetermined length C or less. That is, the judgment condition may stand when the following formula (1) is satisfied.

$$trtt \leq C \quad (1)$$

For example, the predetermined length C may be a value of a cyclic prefix length tcp multiplied with a coefficient $\alpha$ or less as well. The coefficient $\alpha$ may be a coefficient which has a value of 0.0 to 1.0 in range.

$$Predetermined \; length \; C = tcp \times \alpha \quad (2)$$

The mobile station 3 may for example use the sum of the propagation delay time t1 from the base station 2 to the mobile station 3 and the propagation delay time t2 from the mobile station 3 to the base station 2 as the round-trip propagation delay time trtt. Further, the mobile station 3 may for example use a value of two times the propagation delay time t1 from the base station 2 to the mobile station 3 or a value of two times the propagation delay time t2 from the mobile station 3 to the base station 2 as the round-trip propagation delay time trtt.

Further, various variables which can be used for estimating the round-trip propagation delay time trtt can be utilized as the condition variable. For example, the condition variable may also be the transmission time, transmission power, cell radius, or cell type.

FIG. 3(A) illustrates when the judgment condition stands. In one embodiment, the mobile station 3 sets the timing correction amount to zero. In another embodiment, the mobile station 3 determines the timing correction amount in accordance with a variable which is contained in the broadcast information. The mobile station 3 uses the timing correction amount to correct the uplink transmission timing when determining the uplink transmission timing based on the downlink reception timing.

When the round-trip propagation delay time trtt is sufficiently smaller than the cyclic prefix length, even if determining the timing correction amount as explained above, no inter-symbol interference occurs, so the signal quality does not deteriorate.

By determining the uplink transmission timing, the mobile station 3 establishes synchronization at the uplink with the base station 2. The mobile station 3 transmits the uplink signal over a wireless resource which was designated by the broadcast information. In the following explanation, the wireless resource which is designated by the broadcast information is referred to as the "designated resource". The uplink signal which is transmitted over the designated resource is the initial signal which the mobile station 3 transmits over the scheduled uplink channel. In the following explanation, the initial signal which is transmitted using the scheduled uplink channel will be referred to as the "first uplink signal". The first uplink signal includes an identifier of the mobile station 3 which connects to the cell and a wireless resource control connection request signal which requests wireless resource control connection.

FIG. 3(B) illustrates the case where the judgment condition does not stand. In this case, the mobile station 3 transmits a cell connection request signal through a random access channel to the base station 2. The base station 2 uses the reception timing of the cell connection request signal as the basis to determine the timing correction amount. The base station 2 designates the timing correction amount in a cell connection request response signal which responds to the cell connection request signal. Further, the base station 2 allocates a wireless resource for transmission of the first uplink signal and designates this wireless resource by the cell connection request response signal. In the following explanation, the cell connection request signal will be referred to as the "request signal". The cell connection request response signal will be referred to as the "response signal".

The mobile station 3 which receives the response signal acquires the timing correction amount from the response signal and corrects the uplink transmission timing. The mobile station 3 transmits the first uplink signal over the wireless resource which was designated by the response signal.

3. Configuration of Base Station

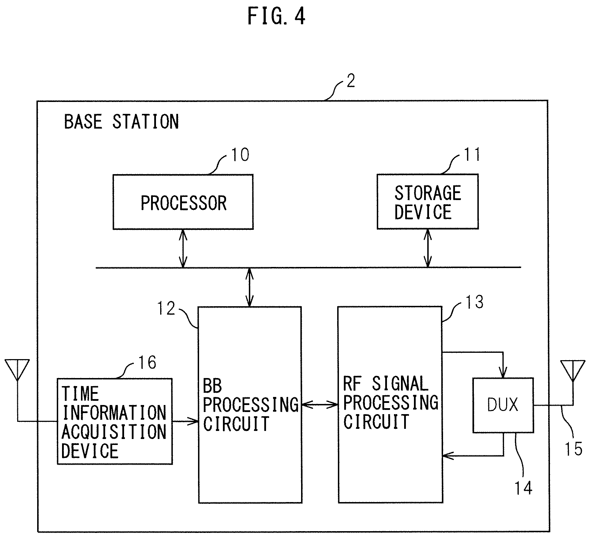

Next, the configurations of the base station 2 and the mobile station 3 will be explained. FIG. 4 is a view which illustrates one example of the hardware configuration of the base station 2. The base station 2 is provided with a processor 10, storage device 11, baseband processing circuit 12, radio frequency signal processing circuit 13, duplexer 14, antenna 15, and time information acquisition device 16. Note that, in the attached figures, the baseband, radio frequency, and duplexer are indicated by "BB", "RF", and "DUX" respectively. Note that, the hardware configuration which is illustrated in FIG. 4 is just one hardware configuration for realizing the base station 2. In the Description, any other hardware configuration may be employed so long as performing the processing which is described below.

The baseband processing circuit 12 performs processing of the baseband signal relating to the encoding and modulation and the demodulation and decoding of a signal which is sent and received between the mobile station 3 and the base station 2. The processor 10 performs processing other than the processing by the baseband processing circuit 12 such as generation of a control signal, scheduling, and other processing of the baseband signal. The storage device 11 stores the control program for baseband signal processing by the processor 10. Further, the data which is used while running these protocols and temporary data are also stored in the storage device 11.

The radio frequency signal processing circuit 13 processes the wireless signal, which is sent and received through the duplexer 14 and antenna 15 between the mobile station 3 and the base station 2, for digital/analog conversion, analog/digital conversion, frequency conversion, signal amplification, and filtering. The time information acquisition device 16 acquires the current time. In one embodiment, the time information acquisition device 16 may be a GPS (Global Positioning System) receiver which receives a GPS signal to acquire GPS time.

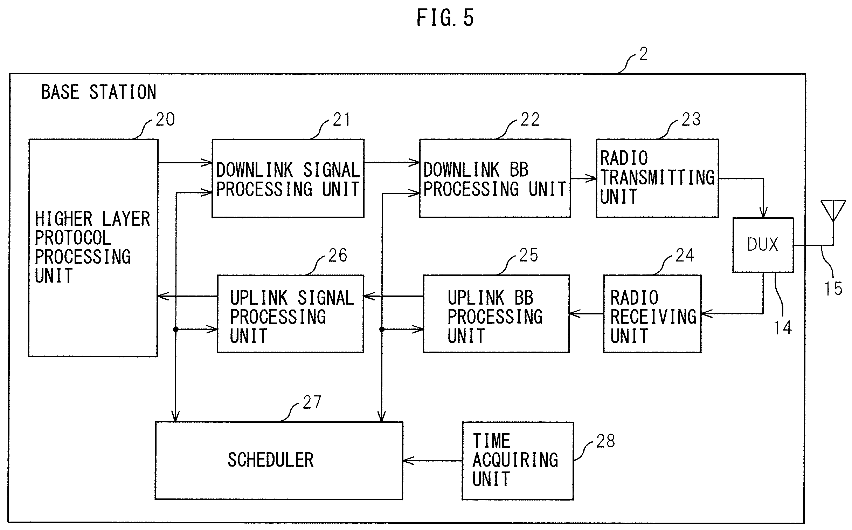

FIG. 5 is a view which illustrates a first example of the configuration of the base station 2. The base station 2 is provided with a duplexer 14, antenna 15, higher layer protocol processing unit 20, downlink signal processing unit 21, downlink baseband processing unit 22, and radio transmitting unit 23. The base station 2 is provided with a radio receiving unit 24, uplink baseband processing unit 25, uplink signal processing unit 26, scheduler 27, and time acquiring unit 28.

The signal processings by the higher layer protocol processing unit 20, downlink signal processing unit 21, uplink signal processing unit 26, and scheduler 27 are performed by the processor 10 which is illustrated in FIG. 4. The signal processings by the downlink baseband processing unit 22 and uplink baseband processing unit 25 are performed by the baseband processing circuit 12. The signal processings by the radio transmitting unit 23 and radio receiving unit 24 are performed by the radio frequency signal processing circuit 13. Further, the processing by the time acquiring unit 28 is performed by the time information acquisition device 16.

The higher layer protocol processing unit 20 processes the user data in accordance with the communication required by the user by receiving as input uplink user data from the uplink signal processing unit 26 and outputting downlink user data to the downlink signal processing unit 21. The higher layer protocol processing unit 20 generates broadcast information which contains a predetermined control signal to be notified from the base station 2 to the mobile station 3 and outputs it to the downlink signal processing unit 21.

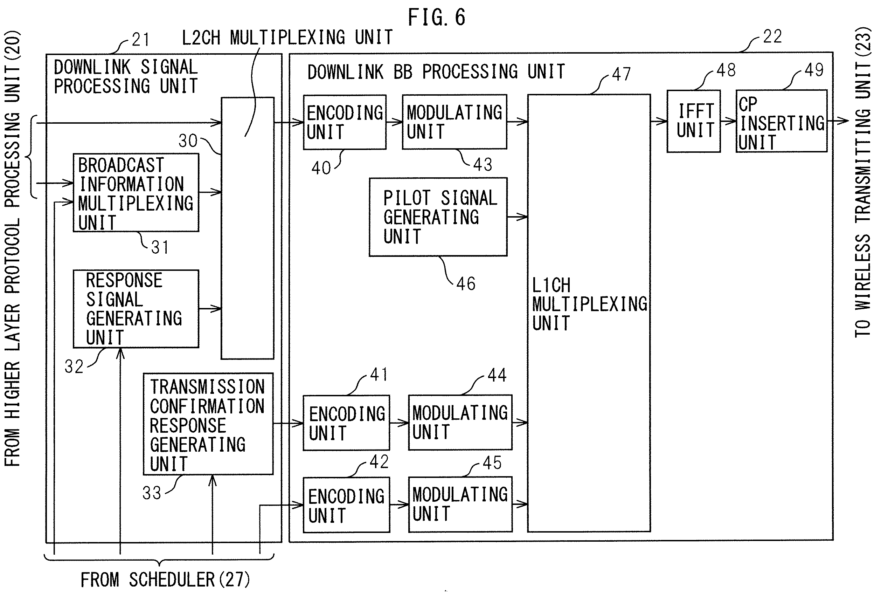

The downlink signal processing unit 21 and the downlink baseband processing unit 22 process the signals to be transmitted by downlink to the mobile station 3. FIG. 6 is a view which illustrates an example of the configuration of the downlink signal processing unit 21 and downlink baseband processing unit 22 which are illustrated in FIG. 5.

The downlink signal processing unit 21 is provided with a data link layer channel multiplexing unit 30, broadcast information multiplexing unit 31, response signal generating unit 32, and transmission confirmation response generating unit 33. The downlink baseband processing unit 22 is provided with encoding units 40 to 42, modulating units 43 to 45, a pilot signal generating unit 46, physical layer channel multiplexing unit 47, inverse fast Fourier transform unit 48, and cyclic prefix inserting unit 49. Note that, in the attached drawings, the data link layer channel, physical layer channel, and inverse fast Fourier transform will be referred to as "L2CH", "L1CH", and "IFFT" respectively.

The data link layer channel multiplexing unit 30 multiplexes the transmission data by allocating a downlink signal to be transmitted to the mobile station 3 to respective channels specified by the data link layer. The data link layer channel multiplexing unit 30 multiplexes the downlink user data input from the higher layer protocol processing unit 20, the broadcast information output from the broadcast information multiplexing unit 31, and the response signal generated by the response signal generating unit 32. The data link layer channel multiplexing unit 30 outputs the multiplexed data to the encoding unit 40.

The broadcast information multiplexing unit 31 acquires the condition variable and information indicating designated resource from the scheduler 27. The broadcast information multiplexing unit 31 multiplexes both the condition variable and information indicating the designated resource with the broadcast information which is input from the higher layer protocol processing unit 20. The response signal generating unit 32 generates a response signal in accordance with the instruction from the scheduler 27 when the base station 2 receives a request signal from the mobile station 3. The transmission confirmation response generating unit 33 generates an acknowledge or negative acknowledge in accordance with the instruction from the scheduler 27 when receiving a signal transmitted from the mobile station 3 by an automatic repeat request protocol. The transmission confirmation response generating unit 33 outputs the acknowledge or negative acknowledge to the encoding unit 41.

The encoding units 40 and 41 respectively encode the outputs from the data link layer channel multiplexing unit 30 and transmission confirmation response generating unit 33. The encoding unit 42 receives the control signal which is transmitted from the scheduler 27 over the physical downlink control channel PDCCH. The encoding unit 42 encodes the received control signal. The modulating units 43 to 45 perform primary modulation of the signals which were encoded by the encoding units 40 to 42. The primary modulated signals are input to the physical layer channel multiplexing unit 47.

The pilot signal generating unit 46 generates a downlink pilot signal and outputs it to the physical layer channel multiplexing unit 47. The physical layer channel multiplexing unit 47 allocates the input signals from the modulating units 43 to 45 and the downlink pilot signal to the physical channels so as to multiplex the transmission signals.

The inverse fast Fourier transform unit 48 performs an inverse fast Fourier transform to the symbols of the signal which was obtained by multiplexing by the physical layer channel multiplexing unit 47 to convert the signal to a time domain signal. The cyclic prefix inserting unit 49 inserts the cyclic prefix in the time domain signal and outputs the result to the radio transmitting unit 23.

Refer to FIG. 5. The radio transmitting unit 23 converts the output signal from the downlink baseband processing unit 22 to an analog signal. The radio transmitting unit 23 converts the frequency of the converted analog signal to the radio frequency. The radio frequency signal is transmitted through the duplexer 14 and antenna 15 to the mobile station 3.

The uplink signal transmitted from the mobile station 3 is received at the antenna 15 and input through the duplexer 14 to the radio receiving unit 24. The radio receiving unit 24 converts the frequency of the received radio frequency signal to convert the received signal to an analog baseband signal and further converts it to a digital baseband signal. The digital baseband signal is input to the uplink baseband processing unit 25.

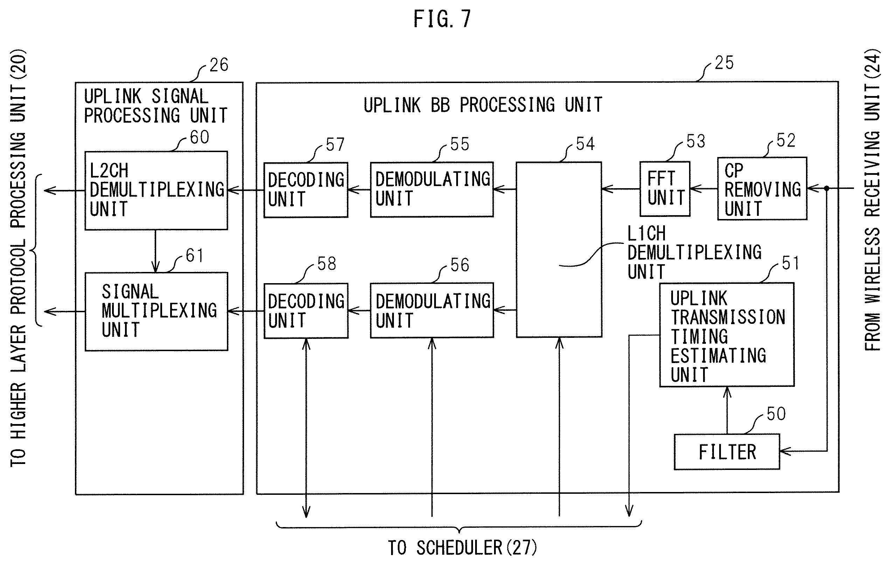

The uplink baseband processing unit 25 and uplink signal processing unit 26 process the signal which is received from the mobile station 3 through an uplink. FIG. 7 is a view which illustrates one example of the configuration of the uplink baseband processing unit 25 and uplink signal processing unit 26 which are illustrated in FIG. 5.

The uplink baseband processing unit 25 is provided with a filter 50, uplink transmission timing estimating unit 51, cyclic prefix removing unit 52, fast Fourier transform unit 53, physical layer channel demultiplexing unit 54, demodulating units 55 and 56, and decoding units 57 and 58. The uplink signal processing unit 26 is provided with a data link layer channel demultiplexing unit 60 and a signal multiplexing unit 61.

The filter 50 detects a request signal which is transmitted by a random access channel of the uplink. The uplink transmission timing estimating unit 51 uses the timing of detection of the request signal as the basis to calculate the amount of correction of the uplink transmission timing of the mobile station 3 and supplies it to the scheduler 27.

The cyclic prefix removing unit 52 removes the cyclic prefix which was inserted in the uplink signal. The fast Fourier transform unit 53 converts the uplink signal, from which the cyclic prefix was removed, to a frequency domain signal and extracts the symbols which were transmitted by respective subcarriers. The fast Fourier transform unit 53 inputs each extracted symbol to the physical layer channel demultiplexing unit 54.

The physical layer channel demultiplexing unit 54 acquires the resource allocation information from the scheduler 27 and demultiplexes the first uplink signal transmitted by the designated resource and the uplink signal transmitted by the physical uplink shared channel PUSCH. The first uplink signal transmitted by the designated resource is demodulated and decoded by the demodulating unit 56 and the decoding unit 58. The uplink signal of the physical uplink shared channel PUSCH is demodulated and decoded by the demodulating unit 55 and the decoding unit 57.

The MCS (Modulation and Coding Scheme) which is necessary for demodulation, decoding, and descrambling of the first uplink signal which is transmitted by the designated resource and the temporary mobile station identifier are supplied from the scheduler 27 to the demodulating unit 56 and the decoding unit 58. The decoded first uplink signal transmitted by the designated resource is output to the signal multiplexing unit 61 and scheduler 27.

The signal of the physical uplink shared channel PUSCH demodulated and decoded by the demodulating unit 55 and the decoding unit 57 is input to the data link layer channel demultiplexing unit 60. The data link layer channel demultiplexing unit 60 demultiplexes the first uplink signal from other uplink signal, the first uplink signal is transmitted over a resource on the PUSCH from a mobile station different from the mobile station 3 transmitting the first uplink signal through the designated resource. The signal multiplexing unit 61 multiplexes both the first uplink signal demodulated and decoded by the demodulating unit 56 and the decoding unit 58 and transmitted by the designated resource and the first uplink signal demultiplexed by the data link layer channel demultiplexing unit 60 and transmitted through a resource on the PUSCH and notifies the result to the higher layer protocol processing unit 20.

Refer to FIG. 5. The scheduler 27 determines the allocation of the radio resources and the transmission format of the uplink channel and downlink channel. Further, the scheduler 27 designates the condition variable and designated resource and outputs them to the broadcast information multiplexing unit 31. In the present embodiment, the condition variable is the transmission time of the broadcast information. The time acquiring unit 28 acquires the current time and outputs the time information to the scheduler 27.

When a request signal from the mobile station 3 is received at the base station 2, the scheduler 27 receives the timing correction amount of the uplink transmission timing of the mobile station 3 from the uplink transmission timing estimating unit 51. When the judgment condition is satisfied at the mobile station 3, the scheduler 27 allocates a designated resource for transmission of the first uplink signal. The scheduler 27 instructs, to the response signal generating unit 32, the generation of a response signal which contains the timing correction amount and resource information of the wireless resource. The processings of the component elements of the base station 2 relating to the cell search processing and cell connection processing will be explained in further detail later.

4. Configuration of Mobile Station

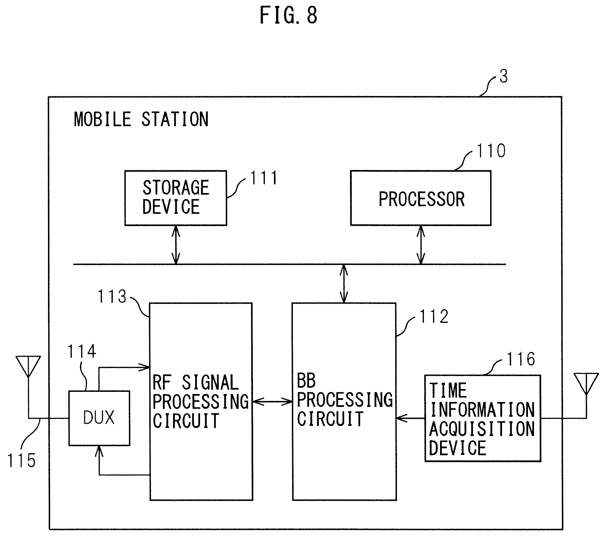

FIG. 8 is a view which illustrates one example of the hardware configuration of the mobile station 3. The mobile station 3 is provided with a processor 110, storage device 111, baseband processing circuit 112, radio frequency signal processing circuit 113, duplexer 114, antenna 115, and time information acquisition device 116. Note that, the hardware configuration shown in FIG. 8 is just one hardware configuration for realizing the mobile station 3. In the Description, any other hardware configuration may be employed so long as performing the processing which will be described below.

The baseband processing circuit 112 performs processing of the baseband signal relating to the encoding and modulation and the demodulation and decoding of signals which are sent and received between the mobile station 3 and the base station 2. The processor 110 performs processing other than the processing by the baseband processing circuit 112 such as generation of a control signal, scheduling, and other processing of the baseband signal or running of application programs for processing user data. The storage device 111 stores the control program and application programs for baseband signal processing by the processor 110. Further, the data which is used while running these protocols and temporary data are also stored in the storage device 111.

The radio frequency signal processing circuit 113 processes the wireless signal, sent and received through the duplexer 114 and antenna 115 between the mobile station 3 and the base station 2, for digital/analog conversion, analog/digital conversion, frequency conversion, signal amplification, and filtering. The time information acquisition device 116 acquires the current time. The time information acquisition device 116 may be a GPS receiver.

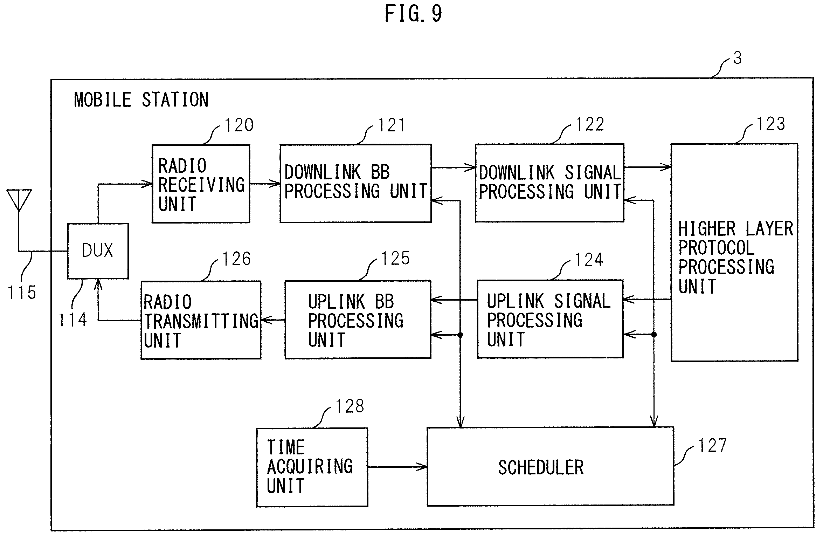

FIG. 9 is a view which illustrate one example of the configuration of the mobile station 3. The mobile station 3 is provided with a duplexer 114, antenna 115, radio receiving unit 120, downlink baseband processing unit 121, downlink signal processing unit 122, and higher layer protocol processing unit 123. The mobile station 3 is further provided with an uplink signal processing unit 124, uplink baseband processing unit 125, radio transmitting unit 126, scheduler 127, and time acquiring unit 128.

The signal processings by the downlink signal processing unit 122, the higher layer protocol processing unit 123, the uplink signal processing unit 124, and the scheduler 127 are performed by the processor 110 which is illustrated in FIG. 8. The signal processings by the downlink baseband processing unit 121 and the uplink baseband processing unit 125 are carried out by the baseband processing circuit 112. The signal processings by the radio receiving unit 120 and the radio transmitting unit 126 are carried out by the radio frequency signal processing circuit 113. Further, the processing by the time acquiring unit 128 is carried out by the time information acquisition device 116.

The radio receiving unit 120 receives as input the downlink signal which is received at the antenna 115 through the duplexer 114. The radio receiving unit 120 converts the received signal to an analog baseband signal and further converts it to a digital baseband signal. The digital baseband signal is input to the downlink baseband processing unit 121.

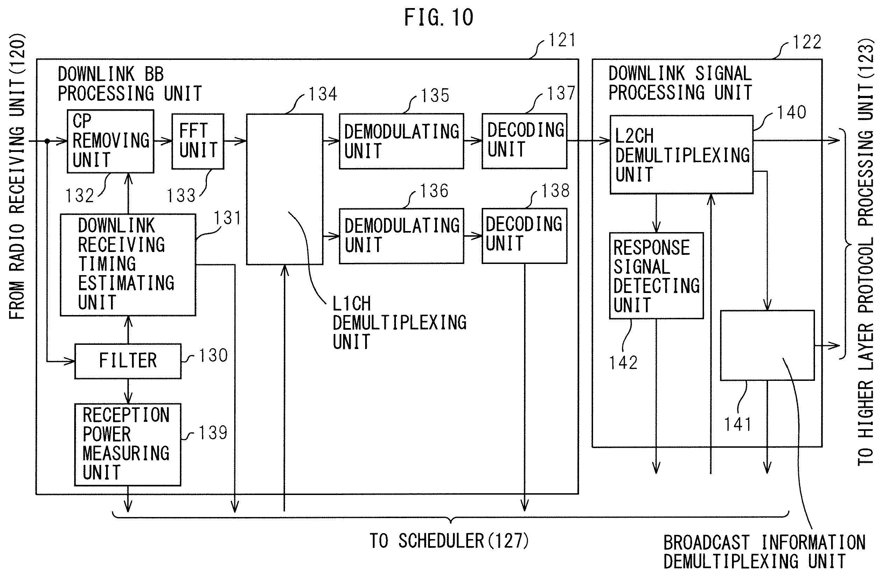

The downlink baseband processing unit 121 and the downlink signal processing unit 122 process signals which are received via downlink from the base station 2. FIG. 10 is a view which illustrates one example of the configuration of the downlink signal processing unit 121 and downlink baseband processing unit 122 which are shown in FIG. 9.

The downlink baseband processing unit 121 is provided with a filter 130, downlink reception timing estimating unit 131, cyclic prefix removing unit 132, fast Fourier transform unit 133, physical layer channel demultiplexing unit 134, demodulating units 135 and 136, decoding units 137 and 138, and a reception power measuring unit 139. The downlink signal processing unit 122 is provided with a data link layer channel demultiplexing unit 140, broadcast information demultiplexing unit 141, and response signal detecting unit 142.

The filter 130 detects the downlink pilot signal on the downlink synchronization pilot channel. The downlink reception timing estimating unit 131 estimates the reception timing of the downlink signal, that is, the downlink reception timing, in accordance with the detection timing of the downlink pilot signal. The downlink reception timing estimating unit 131 outputs the downlink reception timing to the cyclic prefix removing unit 132 and the scheduler 127. The cyclic prefix removing unit 132 identifies the cyclic prefix which is inserted into the downlink signal in accordance with the downlink reception timing and removes the cyclic prefix from the downlink signal.

The fast Fourier transform unit 133 converts the downlink signal, from which the cyclic prefix has been removed, to a frequency domain signal and extracts the symbols which were transmitted over the subcarriers. The fast Fourier transform unit 133 inputs each extracted symbol to the physical layer channel demultiplexing unit 134.

The physical layer channel demultiplexing unit 134 acquires, from the scheduler 127, the resource allocation information and downlink reception timing and demultiplexes the signals on the physical downlink shared channel PDSCH and physical downlink control channel PDCCH. The signal on the physical downlink shared channel PDSCH is demodulated and decoded by the demodulating unit 135 and the decoding unit 137. The signal on the physical downlink control channel PDCCH is demodulated and decoded by the demodulating unit 136 and the decoding unit 138 respectively.

The user data decoded by the decoding unit 137 is input to the data link layer channel demultiplexing unit 140. The control information decoded by the decoding unit 138 is input to the scheduler 127. The control information input to the scheduler 127 is, for example, the allocated resource information of the physical downlink shared channel PDSCH and the cell connection processing startup request signal by which the base station 2 makes the mobile station 3 start up the cell connection processing. The reception power measuring unit 139 measures the reception strength of the downlink pilot signal. The reception power measuring unit 139 inputs the reception power information to the scheduler 127.

The data link layer channel demultiplexing unit 140 acquires the downlink reception timing from the scheduler 127 and demultiplexes the broadcast information and response information from other downlink data. The broadcast information and response information are respectively input to the broadcast information demultiplexing unit 141 and response signal detecting unit 142. Other downlink signal is input to the higher layer protocol processing unit 123.

The broadcast information demultiplexing unit 141 demultiplexes the condition variable and information of the designated resource which are multiplexed in the broadcast information and transmitted from the base station 2. The broadcast information demultiplexing unit 141 outputs the condition variable and the information of the designated resource to the scheduler 127 and outputs the remaining broadcast information to the higher layer protocol processing unit 123. The response signal detecting unit 142 detects the response signal from the signal which is input from the data link layer channel demultiplexing unit 140. The response signal detecting unit 142 outputs the detected response signal to the scheduler 127.

Refer to FIG. 9. The higher layer protocol processing unit 123 processes the user data in accordance with the communication required by a user by receiving as input downlink user data from the downlink signal processing unit 122 and outputting uplink user data to the uplink signal processing unit 124. Further, the higher layer protocol processing unit 123 generates the first uplink signal. The higher layer protocol processing unit 123 executes the higher layer protocol in accordance with a control signal which is contained in the broadcast information.

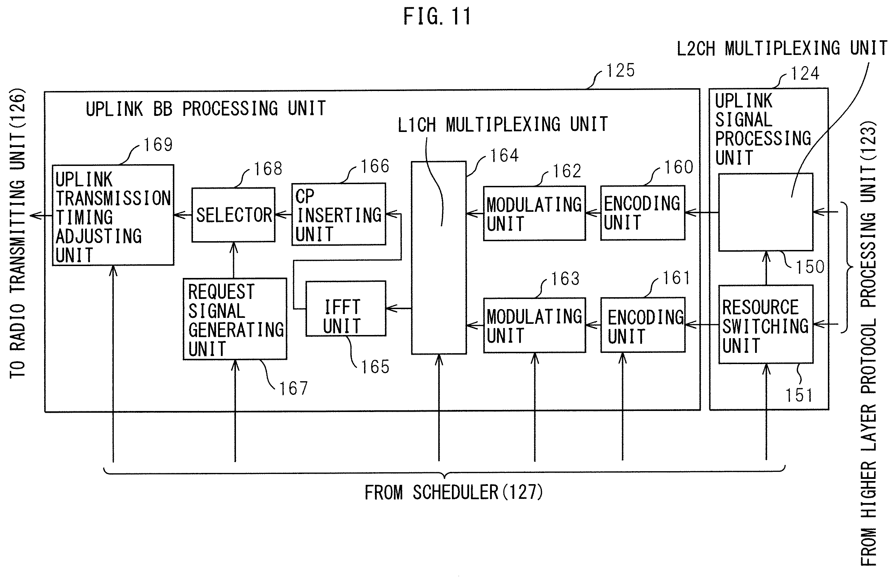

The uplink signal processing unit 124 and uplink baseband processing unit 125 process a signal which is transmitted by uplink to the base station 2. FIG. 11 is a view which illustrates an example of the configurations of the uplink signal processing unit 124 and uplink baseband processing unit 125 shown in FIG. 9.

The uplink signal processing unit 124 is provided with a data link layer channel multiplexing unit 150 and a resource switching unit 151. The uplink baseband processing unit 125 is provided with encoding units 160 and 161, modulating units 162 and 163, a physical layer channel multiplexing unit 164, inverse fast Fourier transform unit 165, and cyclic prefix inserting unit 166. Further, the uplink baseband processing unit 125 is provided with a request signal generating unit 167, selector 168, and uplink transmission timing adjusting unit 169.

The data link layer channel multiplexing unit 150 allocates the user data and control signal to be transmitted to the base station 2 to each channel specified at the data link layer so as to multiplex the transmission data. The resource switching unit 151 receives as input the first uplink signal from the higher layer protocol processing unit 123. When the scheduler 127 judges if the judgment condition stands, the resource switching unit 151 switches the radio resource for transmission of the first uplink signal in accordance with the results of judgment of whether the judgment condition stands.

When the judgment condition stands, the resource switching unit 151 inputs the first uplink signal to the encoding unit 161. The encoding unit 161 and the modulating unit 163 acquire resource information of the designated resource from the scheduler 127. The first uplink signal is scrambled, encoded, and modulated by the encoding unit 161 and modulating unit 163.

When the judgment condition does not stand, the resource switching unit 151 inputs the first uplink signal to the data link layer channel multiplexing unit 150. The data link layer channel multiplexing unit 150 multiplexes the first uplink signal with other uplink data. The uplink signal which has been multiplexed by the data link layer channel multiplexing unit 150 is scrambled, encoded, and modulated by the encoding unit 160 and modulating unit 162.

The physical layer channel multiplexing unit 164 multiplexes the input signals from the modulating units 162 and 163. At this time, the physical layer channel multiplexing unit 164 acquires the resource information of the designated resource from the scheduler 127 and allocates the designated resource to the first uplink signal which is input from the modulating unit 163.

The inverse fast Fourier transform unit 165 applies the inverse fast Fourier transform to the symbols of the signal obtained by multiplexing by the physical layer channel multiplexing unit 164 so as to convert the signal to a time domain signal. The cyclic prefix inserting unit 166 inserts a cyclic prefix in the time domain signal. The request signal generating unit 167 generates a request signal in accordance with the instruction of the scheduler 127.

The selector 168 switches the input source of the transmission signal to either of the cyclic prefix inserting unit 166 and request signal generating unit 167. The uplink transmission timing adjusting unit 169 acquires the uplink transmission timing correction amount from the scheduler 127 and adjusts the uplink transmission timing in accordance with the acquired correction amount.

Refer to FIG. 9. The radio transmitting unit 126 converts the output signal from the uplink baseband processing unit 125 to an analog signal. The radio transmitting unit 126 converts the frequency of the converted analog signal to the radio frequency. The radio frequency signal is transmitted through the duplexer 114 and the antenna 115 to the base station 2.

The scheduler 127 controls the demodulation, decoding, and demultiplexing of the signal at the downlink baseband processing unit 121 and downlink signal processing unit 122 in accordance with the allocation of radio resources and the transmission format determined by the scheduler 27 of the base station 2. Further, the scheduler 127 controls the encoding, modulation, and multiplexing of the signal at the uplink signal processing unit 124 and uplink baseband processing unit 125 in accordance with the allocation of radio resources and the transmission format determined by the scheduler 27.

The scheduler 127 acquires, from the broadcast information demultiplexing unit 141, the condition variable and information of the designated resource transmitted as broadcast information from the base station 2. The scheduler 127 uses the transmission time of the broadcast information received as the condition variable from the base station 2 and the reception time of the broadcast information as the basis to calculate the round-trip propagation delay time trtt. The time acquiring unit 128 acquires the current time and supplies the time information to the scheduler 127.

The scheduler 127 judges if the judgment condition which is designated by the above condition (1) stands. When the judgment condition stands, the scheduler 127 judges not to acquire the timing correction amount of the uplink transmission timing from the base station 2. When the judgment condition does not stand, the scheduler 127 judges to acquire the timing correction amount from the base station 2.

When not acquiring the timing correction amount from the base station 2, the scheduler 127 sets the timing correction amount at the mobile station 3 to zero. In another embodiment, the scheduler 127 determines the timing correction amount in accordance with the condition variable. The scheduler 127 outputs the timing correction amount to the uplink transmission timing adjusting unit 169. Further, the resource switching unit 151 inputs the first uplink signal to the encoding unit 161.

When acquiring the timing correction amount from the base station 2, the scheduler 127 instructs the request signal generating unit 167 to generate a request signal. Due to the request signal, the base station 2 measures the timing correction amount and transmits a response signal, to the mobile station 3, which contains the timing correction amount and the designation of the radio resource for transmission of the first uplink signal. The scheduler 127 acquires the timing correction amount and radio resource from the response signal which is detected by the response signal detecting unit 142. The scheduler 127 outputs the timing correction amount to the uplink transmission timing adjusting unit 169. Further, the resource switching unit 151 inputs the first uplink signal to the data link layer channel multiplexing unit 150. The processings of the different component elements of the mobile station 3 relating to cell search processing and cell connection processing will be explained later in further detail.

5. Cell Search Processing and Cell Connection Processing by Base Station and Mobile Station

Next, the processings at the base station 2 and the mobile station 3 for the cell search processing will be explained. Using the pilot signal generating unit 46 of the base station 2 illustrated in FIG. 6, a downlink pilot signal is generated. The downlink pilot signal is periodically transmitted to the mobile station 3. The downlink reception timing estimating unit 131 of the mobile station 3 illustrated in FIG. 10 estimates the downlink reception timing in accordance with the reception timing of the downlink pilot signal so as to acquire the reception timing of the broadcast information.

The time acquiring unit 28 illustrated in FIG. 5 acquires the current time and outputs the time information to the scheduler 27. The scheduler 27 adds an offset by the processing delay occurred from the acquisition time by the time acquiring unit 28 to the transmission time of the broadcast information, then outputs the time information to the broadcast information multiplexing unit 31. The broadcast information multiplexing unit 31 multiplexes the time information received from the scheduler 127 and the information of the designated resource received from the scheduler 27 and broadcast information notified from the higher layer protocol processing unit 20 and periodically transmits the result to the mobile stations 3.

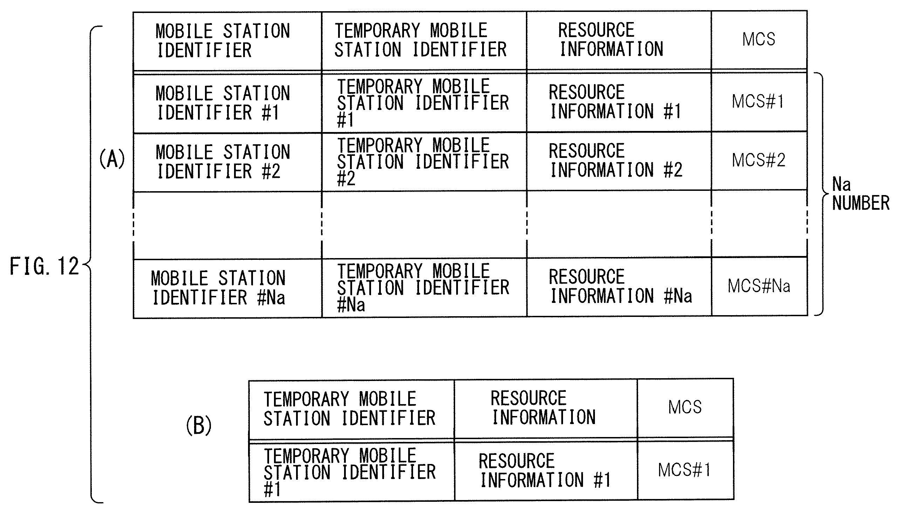

A first example of the resource information of the designated resource which is multiplexed with the broadcast information is illustrated in FIG. 12, (A). The example of FIG. 12(A) designates the designated resources for a plurality of mobile stations 3. In the illustrated example, the designated resources are designated for a predetermined Na number of mobile stations 3. The resource information, for example, may include "mobile station identifiers" of the mobile stations 3, "temporary mobile station identifiers" which are allocated by the base station 2 to the mobile stations 3, "resource information" of designated resources which are allocated to the mobile stations 3, and "MCS's" of the signals which are transmitted by the designated resources.

The example of resource information illustrated in FIG. 12(A), for example, is used in a case where the identifier of the mobile station 3 connected to the base station 2 is known. An example of such a base station 2 is, for example, a femtocell base station which covers a CSG (Closed Subscriber Group) cell. Further, when an unspecified large number of mobile stations 3 connect to the base station 2, the information element "mobile station identifier" may be omitted. In this case, the scheduler 127 of the mobile station 3 selects any of Na number of designated resources for use as the transmission resources of first uplink signals. That is, the mobile stations 3 which start cell connection to the base station 2 share a plurality of common designated resources.

A second example of the resource information of the designated resource is illustrated in FIG. 12, (B). The example of FIG. 12(B) designates the designated resource for a single mobile station 3. The resource information, for example, may include a "temporary mobile station identifier" which is allocated by the base station 2 to the mobile station 3, "resource information" of a designated resource which is allocated to the mobile station 3, and an "MCS" of the signal which is transmitted by the designated resource. The mobile stations 3 which start cell connection to a base station 2 share a common single designated resource.

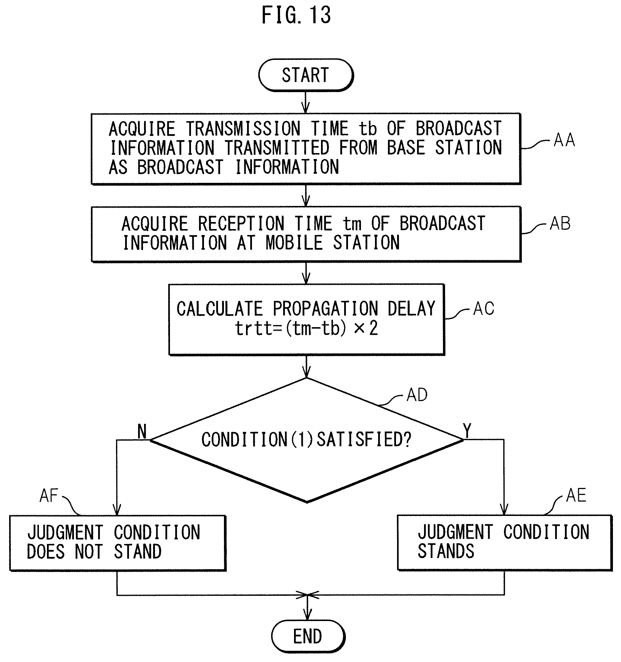

The scheduler 127 of the mobile station 3 illustrated in FIG. 9 judges if the judgment condition of the above formula (1) stands. FIG. 13 is an explanatory view of one example of processing for judging if a judgment condition stands. In another embodiment, the operations AA to AF may also be steps.

In the operation AA, the scheduler 127 acquires the transmission time tb of the broadcast information transmitted from the base station 2 as broadcast information, from the broadcast information demultiplexing unit 141 illustrated in FIG. 10. In the operation AB, the time acquiring unit 128 acquires the current time and outputs the time information to the scheduler 127. The scheduler 127 subtracts an offset by the processing delay, due to the reception of broadcast information and the acquisition of time by the time acquiring unit 128, from the time information which is input from the time acquiring unit 128 at the time of reception of broadcast information, so as to acquire the reception time tm of the broadcast information.

In the operation AC, the scheduler 127 uses the following formula (3) to estimate the round-trip propagation delay time trtt between the base station 2 and the mobile station.

```
[0093]    trtt = (reception time tm of broadcast
information - transmission time tb of broadcast
information) × 2 (3)
```

In the operation AD, the scheduler 127 judges if the round-trip propagation delay time trtt satisfies the condition (1), that is, if the round-trip propagation delay time trtt is the predetermined length C or less. When the condition (1) is satisfied (operation AD: Y), in the operation AE, the scheduler 127 judges that the judgment condition stands. When the condition (1) is not satisfied (operation AD: N), in the operation AF, the scheduler 127 judges that the judgment condition does not stand.

Next, the processings at the base station 2 and the mobile station 3 in the cell connection processing will be explained. Refer to FIG. 9. When the judgment condition does not stand, the scheduler 127 instructs the request signal generating unit 167 to generate a request signal. The mobile station 3 transmits the request signal to the base station 2. The uplink transmission timing estimating unit 51 of the base station 2, which receives the request signal, calculates the timing correction amount of the uplink transmission timing of the mobile station 3. The response signal generating unit 32 generates a response signal which contains the timing correction amount and information of the radio resource for transmission of the first uplink signal. The base station 2 transmits the response signal to the mobile station 3.

The scheduler 127 of the mobile station 3 acquires, from the response signal, the timing correction amount and information of the radio resource for transmission of the first uplink signal. The scheduler 127 outputs the acquired timing correction amount to the uplink transmission timing adjusting unit 169. The uplink transmission timing adjusting unit 169 uses the timing correction amount acquired from the scheduler 127 to correct the uplink transmission timing for transmitting the uplink signal. Further, the scheduler 127 outputs the information of the radio resource to the physical layer channel multiplexing unit 164.

The resource switching unit 151 inputs the first uplink signal to the data link layer channel multiplexing unit 150. The physical layer channel multiplexing unit 164 allocates a radio resource on the physical uplink shared channel PUSCH designated by the response signal to the first uplink signal. The first uplink signal is transmitted over the physical uplink shared channel PUSCH to the base station 2.

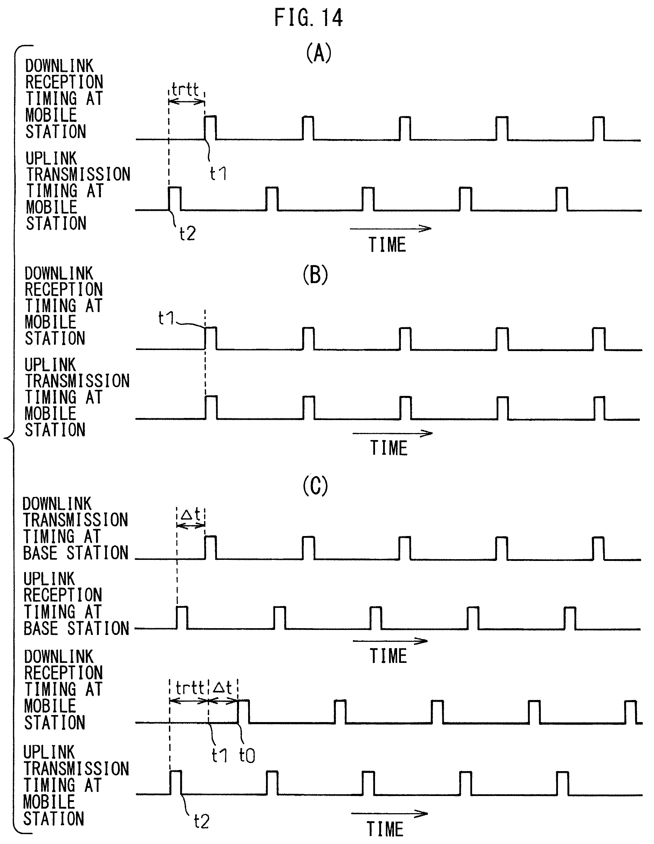

When the judgment condition stands, the scheduler 127 determines the timing correction amount without transmitting a request signal and receiving a response signal. FIG. 14 is an explanatory views of correction of the uplink transmission timing when the judgment condition stands. The pulses in the figures represent the symbol timings of the uplink signal and downlink signal.

In one embodiment, as shown in FIG. 14(A), the scheduler 127 may set the round-trip propagation delay time trtt as the timing correction amount. The uplink transmission timing adjusting unit 169 determines the time t2, as the uplink transmission timing, which is earlier than the downlink reception timing t1 of the downlink signal, received at the mobile station 3, by the amount of the timing correction amount trtt.

In another embodiment, as shown in FIG. 14(B), the scheduler 127 may make the round-trip propagation delay time trtt zero. The uplink transmission timing adjusting unit 169 determines the downlink reception timing t1 of the downlink signal, as the uplink transmission timing, which is received at the mobile station 3. If the round-trip propagation delay time trtt is sufficiently smaller than the cyclic prefix length Cp, no inter-symbol interference occurs.

Further, in another embodiment, as shown in FIG. 14(C), the base station 2 may provide a time difference Δt between the symbol timing of the downlink signal and the symbol timing of the uplink signal. In this case, the scheduler 127 may correct the reference time t1 of the uplink transmission timing determined based on the downlink reception timing t0 by exactly the timing correction amount trtt and use the resultant time t2 as the uplink transmission timing. Note that, in the method of correction in FIG. 14(C), the timing correction amount trtt may also be made zero.

Refer to FIG. 9. The scheduler 127 outputs a temporary mobile station identifier, MCS, and resource information, contained in the information of the designated resource received as broadcast information, to the encoding unit 161, modulating unit 163, and physical layer channel multiplexing unit 164. The resource switching unit 151 inputs the first uplink signal to the encoding unit 161. The encoding unit 161 and modulating unit 163 perform encoding, scrambling, and modulation in accordance with the temporary mobile station identifier and MCS contained in the information of the designated resource. The physical layer channel multiplexing unit 164 allocates the designated resource to the first uplink signal. The uplink transmission timing adjusting unit 169 uses the timing correction amount acquired from the scheduler 127 to correct the uplink transmission timing for transmitting the uplink signal.

The scheduler 27 in the base station 2 illustrated in FIG. 5 monitors for reception of the first uplink signal transmitted from the mobile station 3. When detecting reception of the first uplink signal, it judges whether the first uplink signal has successfully been received in accordance with error detection results at the decoding units 57 and 58. When the first uplink signal has successfully been received, the scheduler 27 ends the cell connection processing at the physical layer, makes the transmission confirmation response generating unit 33 generate an acknowledge, and transmits it to the mobile station 3. The signal multiplexing unit 61 outputs the first uplink signal to the higher layer protocol processing unit 20.

When the first uplink signal fails to be received, the scheduler 27 makes the transmission confirmation response generating unit 33 generate a negative acknowledge and transmits it to the mobile station 3. Note that, when a plurality of mobile stations 3 share a designated resource, transmission of the negative acknowledge may be omitted. When the failure of reception of the first uplink signal is due to the collision of first uplink signals which are simultaneously transmitted from a plurality of mobile stations 3, it is possible to avoid repeated collision by omitting the transmission of the negative acknowledge.

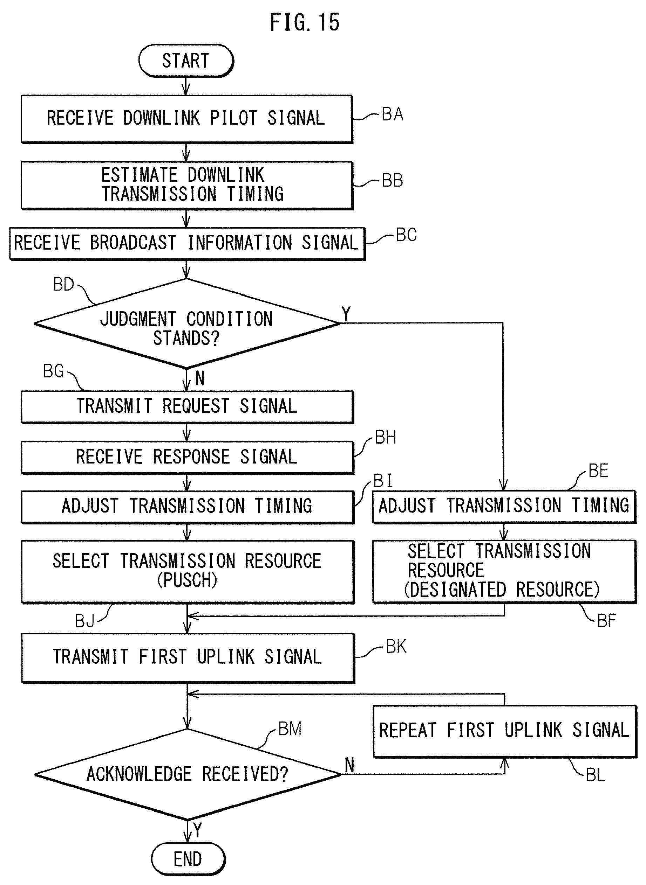

FIG. 15 is an explanatory view of one example of the processing of the mobile station 3 at the time of cell search processing and cell connection processing. Note that, in another embodiment, the following operations BA to BL may also be steps.

In the operation BA, the filter 130 detects the downlink pilot signal on the downlink synchronization pilot channel. The downlink reception timing estimating unit 131 receives the downlink pilot signal. In the operation BB, the downlink reception timing estimating unit 131 estimates the downlink reception timing in accordance with the detection timing of the downlink pilot signal. By estimating the downlink reception timing, synchronization at the downlink is established.

In the operation BC, the mobile station 3 receives broadcast information. The broadcast information demultiplexing unit 141 demultiplexes the condition variable and information of the designated resource from the broadcast information. In the operation BD, the scheduler 127 judges if the judgment condition stands. When the judgment condition stands (operation BD: Y), the processing proceeds to the operation BE. When the judgment condition does not stands (operation BD: N), the processing proceeds to the operation BG.

In the operation BE, the scheduler 127 sets the timing correction amount to zero. Alternatively, the scheduler 127 makes the timing correction amount the round-trip propagation delay time trtt. The uplink transmission timing adjusting unit 169 adjusts the uplink transmission timing by the timing correction amount determined by the scheduler 127 and establishes synchronization of the uplink. In the operation BF, the resource switching unit 151 selects a designated resource as the radio resource for transmitting the first uplink signal. After that, the processing proceeds to the operation BK.

In the operation BG, the scheduler 127 instructs the request signal generating unit 167 to generate a request signal. The mobile station 3 transmits the request signal to the base station 2. In the operation BH, the mobile station 3 receives the response signal transmitted from the base station 2. The scheduler 127 acquires, from the response signal, the timing correction amount and the information of the radio resource for transmitting the first uplink signal.

In the operation BI, the uplink transmission timing adjusting unit 169 adjusts the uplink transmission timing by the timing correction amount acquired from the response signal and establishes synchronization of the uplink. In the operation BJ, the resource switching unit 151 selects the physical uplink shared channel PUSCH as the radio resource for transmitting the first uplink signal. In the operation BK, when the judgment conditions stands, the mobile station 3 uses the designated resource and transmits the first uplink signal by an automatic repeat request protocol. When the judgment condition does not stand, it uses the physical uplink shared channel PUSCH and transmits the first uplink signal by the automatic repeat request protocol.

In the operation BM, the mobile station 3 judges if an acknowledge has been received for the first uplink signal. When an acknowledge has been received (operation BM: Y), the processing ends. When an acknowledge has not been received (operation BM: N), the processing proceeds to the operation BL. In the operation BL, the mobile station 3 repeats the first uplink signal, and the processing is returned to the operation BM.

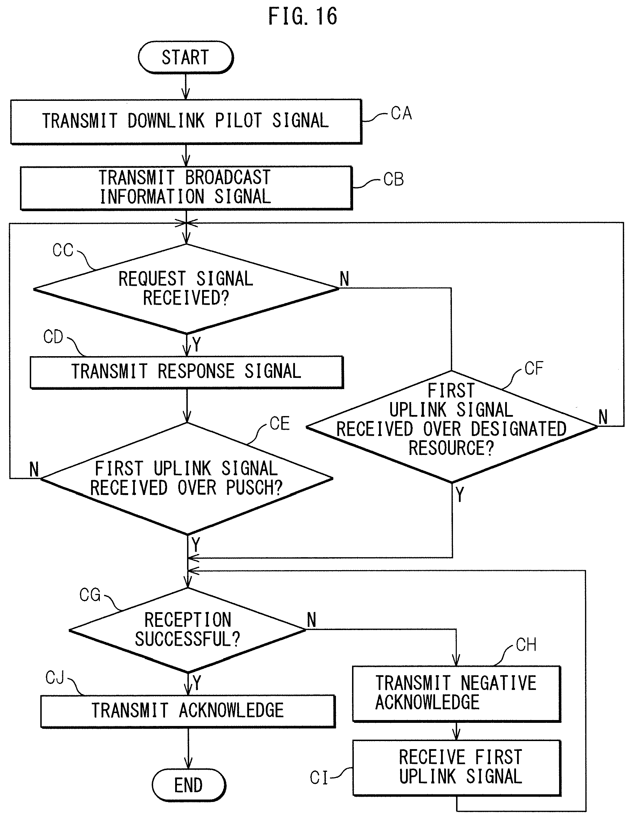

FIG. 16 is an explanatory view of one example of processing by the base station 2 at the time of cell search processing and cell connection processing. Note that, in another embodiment, the following operations CA to CJ may also be steps.

In the operation CA, the pilot signal generating unit 46 generates a downlink pilot signal. The base station 2 transmits the downlink pilot signal to the mobile station 3. In the operation CB, the higher layer protocol processing unit 20 generates predetermined broadcast information. The scheduler 27 designates the condition variable and designated resource and outputs them to the broadcast information multiplexing unit 31. The broadcast information multiplexing unit 31 multiplexes the condition variable and information indicating the designated resource with the broadcast information which is input from the higher layer protocol processing unit 20. The base station 2 transmits the broadcast information to the mobile station 3.

After that, in the operation CC, the scheduler 27 monitors whether a request signal has been received from the mobile station 3. When a request signal has been received (operation CC: Y), the processing proceeds to the operation CD. When a request signal has not been received (operation CC: N), the processing proceeds to the operation CF. In the operation CD, the response signal generating unit 32 generates a response signal. The base station 2 transmits the response signal to the mobile station 3. In the operation CE, the scheduler 27 monitors whether the first uplink signal has been received from the mobile station 3 over the physical uplink shared channel PUSCH. When the first link signal has been received (operation CE: Y), the processing proceeds to the operation CG. When the first link signal has not been received (operation CE: N), the processing returns to the operation CC.

In the operation CF, the scheduler 27 monitors if the first link signal has been received from the mobile station 3 over the physical uplink designated resource. When the first link signal has been received (operation CF: Y), the processing proceeds to the operation CG. When the first link signal has not been received (operation CF: N), the processing returns to the operation CC.

In the operation CG, the scheduler 27 monitors whether the first uplink signal has been successfully received. When successfully received (operation CG: Y), the processing proceeds to the operation CJ. When reception has failed (operation CG: N), the processing proceeds to the operation CH.

In the operation CH, the transmission confirmation response generating unit 33 generates a negative acknowledge. The base station 2 transmits the negative acknowledge to the mobile station 3. In the operation CI, the base station 2 receives the first uplink signal repeated from the mobile station 3. After that, the processing returns to the operation CG. In the operation CJ, the transmission confirmation response generating unit 33 generates an acknowledge. The base station 2 transmits the acknowledge to the mobile station 3. After that, the processing is ended.

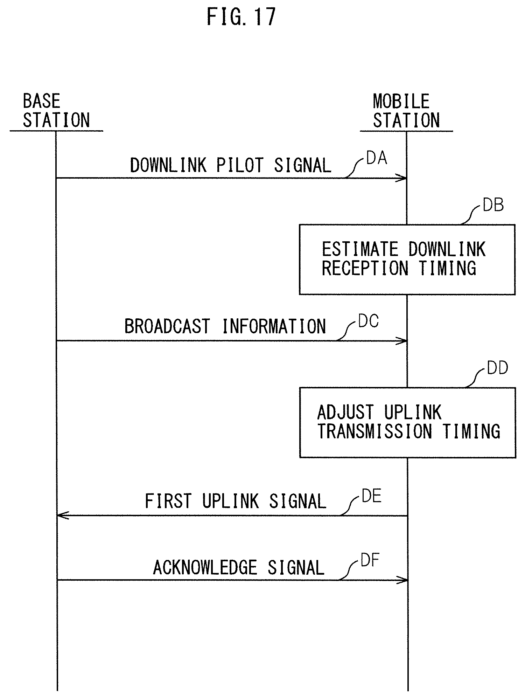

Next, the signal sequence between the base station 2 and the mobile station 3 during the processing shown in FIG. 15 and FIG. 16 will be shown. FIG. 17 is a signal sequence chart in the case where the judgment condition stands. Note that, in another embodiment, the following operations DA to DF may also be steps.

In the operation DA, a downlink pilot signal is periodically transmitted from the base station 2 to the mobile station 3. In the operation DB, the mobile station 3 uses the downlink pilot signal to estimate the downlink reception timing, whereby synchronization of the downlink is established. In the operation DC, the base station 2 transmits broadcast information, which contains the condition variable and information of the designated resource, to the mobile station 3. The mobile station 3 judges if the judgment condition stands in accordance with the condition variable.

When the judgment condition stands, in the operation DD, the mobile station 3 adjusts the uplink transmission timing. Due to this, synchronization of the uplink is established. In the operation DE, the mobile station 3 transmits the first uplink signal to the base station 2. When the first uplink signal is successfully received, in the operation DF, the base station 2 transmits an acknowledge signal to the mobile station 3.

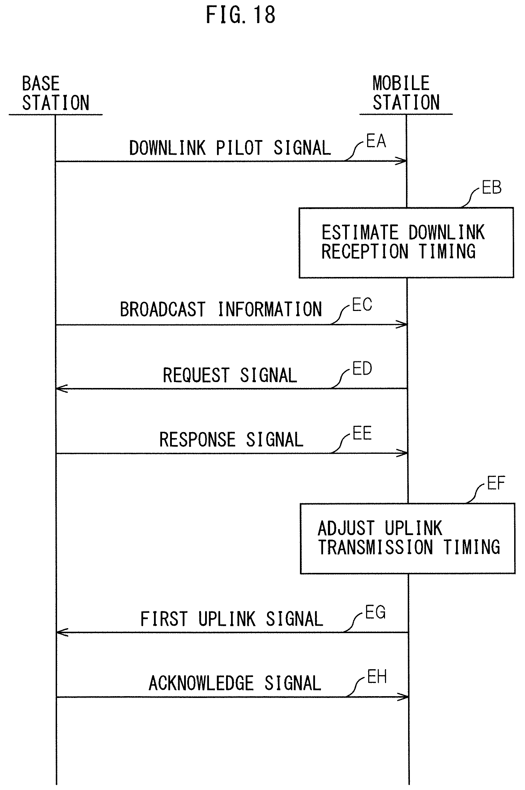

FIG. 18 is a signal sequence chart in the case where the judgment condition does not stand. Note that, in another embodiment, the following operations EA to EH may also be steps.

In the operation EA, a downlink pilot signal is transmitted from the base station 2 to the mobile station 3. In the operation EB, the mobile station 3 estimates the downlink reception timing. In the operation EC, the base station 2 transmits broadcast information, which contains the condition variable and information on the designated resource, to the mobile station 3. The mobile station 3 judges whether the judgment condition stands in accordance with the condition variable.

When the judgment condition does not stand, in the operation ED, the mobile station 3 transmits a request signal. In the operation EE, the base station 2 transmits a response signal which contains information regarding the timing correction amount of the uplink transmission timing to the mobile station 3. In the operation EF, the mobile station 3 uses the received timing correction amount to adjust the uplink transmission timing. In the operation EG, the mobile station 3 transmits the first uplink signal to the base station 2. When the first uplink signal is successfully received, in the operation EH, the base station 2 transmits an acknowledge signal to the mobile station 3.

According to the present embodiment, when the round-trip propagation delay time trtt between the base station 2 and the mobile station 3 is sufficiently small, cell connection processing can be performed even without processing for sending and receiving a request signal and response signal. For this reason, the cell connection processing time can be shortened. In particular, a femtocell, where higher quality and lower delay service is sought compared with a macrocell, has a smaller round-trip propagation delay time trtt than the macrocell. For this reason, by the present embodiment being utilized for cell connection processing in a femtocell, high quality, low delay service can be provided in a femtocell.

Note that, in the above explanation, the case of cell connection processing in a contention based access was explained, where cell connection processing is started up by the higher layer protocol processing unit 123 of the mobile station 3. In addition to this, it is also possible to similarly adjust the uplink transmission timing for cell connection processing in a non-contention based access where cell connection processing is started up by control information via the physical downlink control channel PDCCH from the base station 2.

6. Other Methods of Calculation of Round-Trip Propagation Delay Time

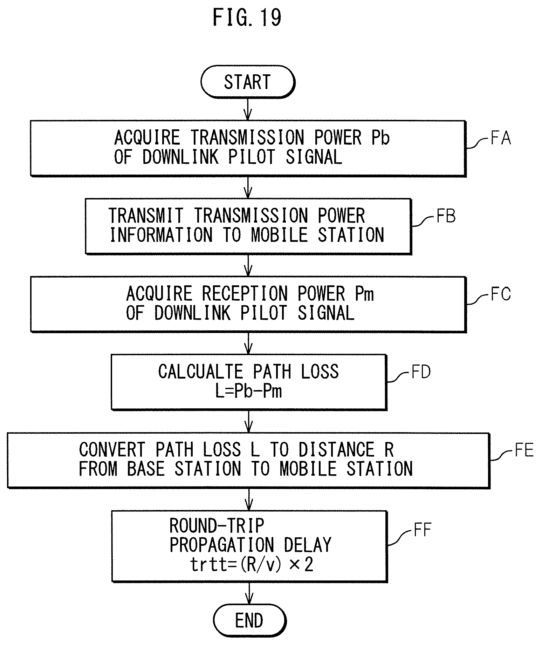

Next, examples of other methods of calculation of the round-trip propagation delay time trtt will be explained. The round-trip propagation delay time trtt can also be estimated from a path loss between the base station 2 and the mobile station 3. FIG. 19 is an explanatory view of a second example of the method of calculation of the round-trip propagation delay time. Note that, in another embodiment, the following operations FA to FF may also be steps.

In the operation FA, the scheduler 27 of the base station 2 acquires the downlink transmission power Pb of the pilot signal received at the base station 2. In the operation FB, the base station 2 transmits information of the downlink transmission power Pb to the mobile station 3 as a condition variable. In the operation FC, the reception power measuring unit 139 of the mobile station 3 acquires the reception power Pm of the downlink pilot signal. In the operation FD, the scheduler 127 of the mobile station 3 calculates a path loss L between the base station 2 and the mobile station 3 according to L=Pb-Pm.

In the operation FE, the scheduler 127 converts the path loss L to the distance R between the base station 2 and mobile station 3. The scheduler 127 may, for example, convert the path loss L to the distance R in accordance with conversion formula $L=a+b \times (\log_{10} R)$. The "a" and "b" in the conversion formula are constants depending on the propagation model. Further, the scheduler 127 may, for example, determine the distance R from the path loss L in accordance with the known distance characteristics of path loss. In the operation FF, the scheduler 127 uses the calculation formula trtt=(R/v)x2 to calculate the round-trip propagation delay time trtt. Here, the constant "v" is the speed of the radio wave in the propagation path.

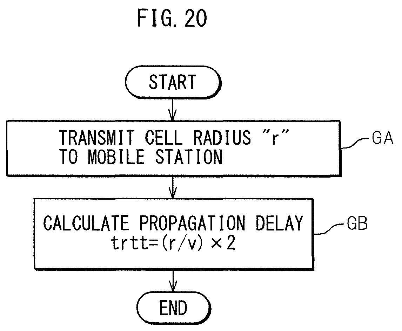

FIG. 20 is a view which explains a third example of the method of calculation of the round-trip propagation delay time. Note that, in another embodiment, the following operations GA to GB may also be steps. In an operation GA, the scheduler 27 of the base station 2 transmits the cell radius "r" of the base station 2 as a condition variable to the mobile station 3. In the operation GB, the scheduler 127 of the mobile station 3 uses the calculation formula trtt=(r/v)x2 to calculate the round-trip propagation delay time trtt. Note that, the base station 2 may also send the mobile station 3 the type of the cell covered by the base station 2 instead of the cell radius "r". The type of the cell may, for example, be a type which differentiates a macrocell and a femtocell from each other. The scheduler 127 of the mobile station 3 estimates the cell radius "r" in accordance with the type of the cell to thereby calculate the round-trip propagation delay time trtt. Further, the scheduler 127 may also simply judge whether to acquire the timing correction amount from the base station 2 in accordance with the type of the cell.

Note that, the above examples of calculation of the round-trip propagation delay time trtt are only illustrations. Various methods for determining the round-trip propagation delay time trtt may be employed.

7. Other Embodiments

Next other embodiments of the base station 2 and the mobile station 3 will be explained. If increasing the correction coefficient α of the above formula (2) to ease the judgment condition (1), the number of mobile stations 3 increases, which omit the transfer of a request signal and response signal in cell connection processing. For this reason, the number of mobile stations 3 with shortened cell connection times increases, but at the same time, the number of mobile stations 3 which utilize the designated resources will increase, so collision between mobile stations 3 in the designated resources will increase.

On the other hand, if decreasing the correction coefficient α of the above formula (2) to make the judgment condition (1) stricter, collision of mobile stations 3 in designated resources will be reduced, but simultaneously the number of mobile stations 3 in which the connection time is shortened will also be reduced. In the following embodiment, the value of the correction coefficient $\alpha$ is variably controlled in accordance with the distribution of the mobile stations 3.

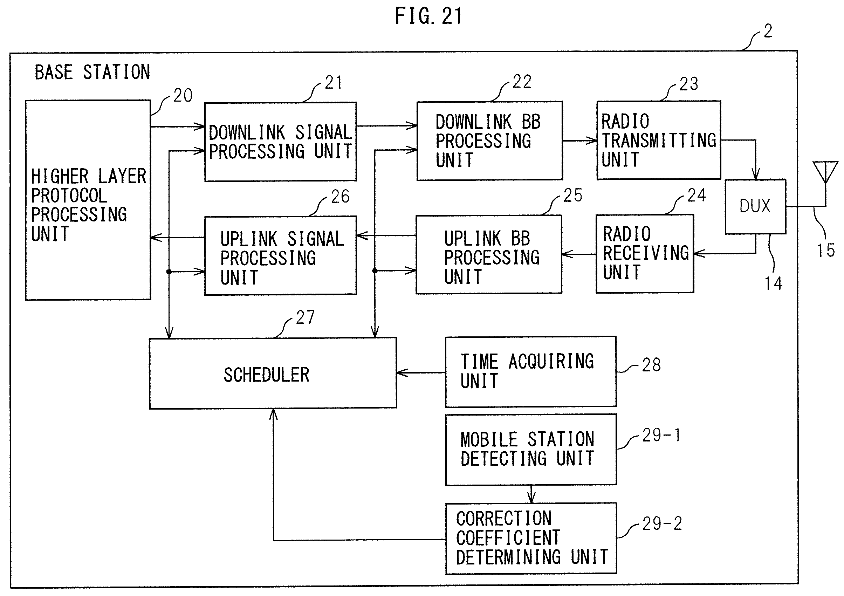

FIG. 21 is a view which represents a second example of the configuration of the base station 2. Component elements which are the same as the component elements which are shown in FIG. 5 are assigned the same reference notations. The operations of the component elements for which the same reference notations are assigned are the same unless particularly indicated. The base station 2 is provided with a mobile station detecting unit 29-1 and a correction coefficient determining unit 29-2. The processings of the mobile station detecting unit 29-1 and correction coefficient determining unit 29-2 are carried out by the processor 10.

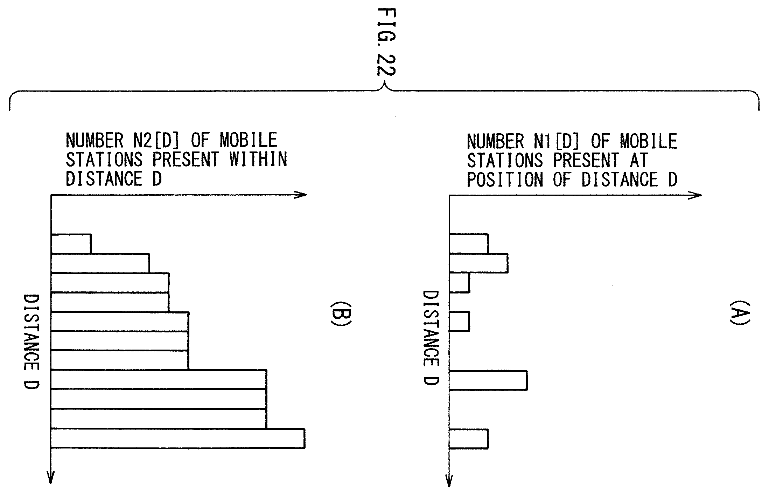

The mobile station detecting unit 29-1 collects the positional information of the mobile stations 3 connected to the base station 2 and outputs the positional information of each mobile station 3 to the correction coefficient determining unit 29-2. The correction coefficient determining unit 29-2 generates a histogram of the number N1[D] of mobile stations which are present at positions of a distance from the base station 2. FIG. 22, (A) depicts a histogram of the number N1[D] of mobile stations.

The correction coefficient determining unit 29-2 generates a cumulative frequency distribution from the histogram of the number N1[D] of mobile stations so as to determine the number N2[D] of mobile stations which are present within a distance D from the base station 2. FIG. 22(B) depicts a graph of the cumulative frequency distribution which shows the number N2[D] of mobile stations. The correction coefficient determining unit 29-2 determines the range "d" where the number N2[D] of mobile stations are in a predetermined range and variably controls the value of the correction coefficient $\alpha$ so that whether the judgment condition of the above formula (1) stands or not is determined in accordance with whether the one-way propagation delay time trtt/2 is the distance "d" or less. The correction coefficient $\alpha$ is a variable which is used for a judgment condition, so is one of the condition variables.

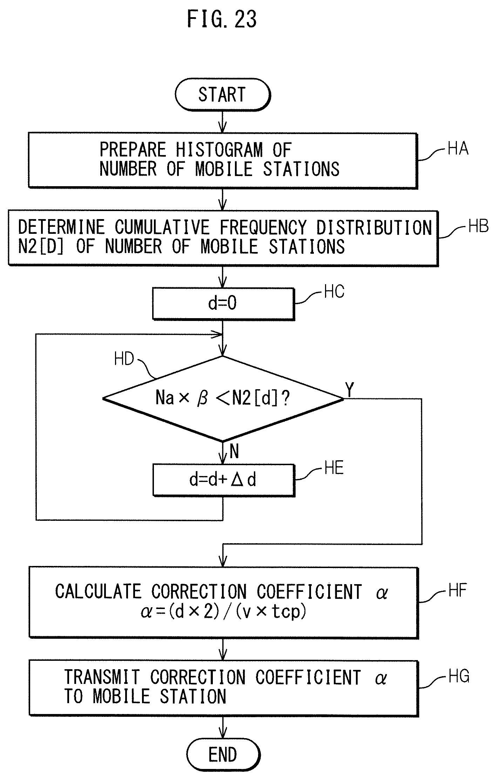

FIG. 23 is an explanatory view of the variable control processing of the correction coefficient $\alpha$. Note that, in another embodiment, the following operations HA to HG may be steps.

In the operation HA, the mobile station detecting unit 29-1 collects the positional information of the mobile stations 3 which are connected to the base station 2. The correction coefficient determining unit 29-2 generates a histogram of the number N1[D] of mobile stations which are present at positions of a distance D from the base station 2. In the operation HB, the correction coefficient determining unit 29-2 determines the number N2[D] of mobile stations which are present at positions of a distance D from the base station 2.

In the operation HC, the correction coefficient determining unit 29-2 initializes the value of the variable "d" to "0". In the operation HD, the correction coefficient determining unit 29-2 judges if the number N2[D] of mobile stations which are present at positions of a distance "d" from the base station 2 has exceeded the value Na×β which is obtained by multiplying the number Na of mobile stations, for which the designated resources are prepared, with the correction coefficient β. If the number N2[D] of mobile stations exceeds the value Na×β (operation HD: Y), the processing proceeds to the operation HF. If the number N2[D] of mobile stations does not exceed the value Na×β (operation HD: N), the processing proceeds to the operation HE. In the operation HE, the correction coefficient determining unit 29-2 increases the value of the variable "d" by exactly a predetermined step Δd and returns the processing to the operation HD.

In the operation HF, the correction coefficient determining unit 29-2 determines the correction coefficient $\alpha$ in accordance with the following formula (4). Using the following formula (4), the correction coefficient $\alpha$ is determined so that the above formula (1) stands or does not stand in accordance with whether the one-way propagation delay time trtt/2 is d/v or less. The correction coefficient determining unit 29-2 notifies the correction coefficient $\alpha$ to the scheduler 27.

$$[0140] \quad \alpha = (d \times 2) / (v \times tcp) \quad (4)$$

In the operation HG, the scheduler 27 includes the correction coefficient $\alpha$, as one of the condition variables, in the broadcast information and notifies it to the mobile station 3. The mobile station 3 uses the correction coefficient $\alpha$ which is notified when judging the judgment condition of the above formula (1).

According to the present embodiment, the value of the correction coefficient $\alpha$ is variably controlled in accordance with the distribution of the mobile stations 3, so it is possible to keep mobile stations 3 from colliding at other designated resources while increasing the number of the mobile stations 3 with shortened connection times to a suitable number.

All examples and conditional language recited hereinafter are intended for pedagogical purposes to aid the reader in understanding the principles of the invention and the concepts contributed by the inventor to furthering the art, and are to be construed as being without limitation to such specifically recited examples and conditions. Nor does the organization of such examples in the specification relate to a showing of the superiority and inferiority of the invention. Although the embodiments of the present inventions have been described in detail, it should be understood that the various changes, substitutions, and alterations could be made hereto without departing from the scope of the invention.

REFERENCE SIGNS LIST

1 communication system
2 base station
3 mobile station
27, 127 scheduler
28, 128 time acquiring unit
31 broadcast information multiplexing unit
46 pilot signal generating unit
131 downlink reception timing estimating unit
141 broadcast information demultiplexing unit
151 resource switching unit
169 uplink transmission timing adjusting unit

**Claims**

1. A mobile station (3) comprising:

    an antenna (115) for receiving broadcast information broadcast by a base station (2) to a plurality of mobile stations including the mobile station (3) ;
    a switching unit configured to determine whether or not to acquire a timing correction amount of an uplink transmission timing from a base station (2) for the mobile station (3), the determination being based on the value of a variable contained in the broadcast information broadcast by the base station (2) and received by the mobile station (3) ; and
    an uplink transmission timing determining unit configured such that, when the switching unit determines not to acquire the timing correction amount from the base station (2), the uplink transmission timing determining unit sets the timing correction amount to zero or calculates the timing correction amount, wherein the calculation uses a value of a variable which is included in the broadcast information which the base station (2) transmits.

2. The mobile station (3) according to claim 1, further comprising:

    a resource information detecting unit configured to detect resource information, contained in the broadcast information, which designates an uplink radio resource; and
    a resource allocating unit (150) configured to allocate a radio resource, designated by the resource information, to an uplink signal transmitted when the switching unit determines not to acquire the timing correction amount from the base station (2).

3. The mobile station (3) according to any of claims

    1 or 2, wherein the switching unit is configured to determine whether or not to acquire the timing correction amount from the base station (2) using information on a signal propagation delay time between the mobile station (3) and the base station (2), which is specified by the value of said variable contained in the broadcast information.

4. The mobile station (3) according to any of claims 1 or 2, wherein the switching unit is configured to determine whether or not to acquire the timing correction amount from the base station (2) using information on a type of the base station (2) which is specified by said variable contained in the broadcast information.

5. A communication system (1) including a base station (2) and a mobile station (3), wherein

    the base station (2) comprises a transmitting unit (23) configured to transmit broadcast information to a plurality of mobile stations including a mobile station (3), the broadcast information including a value of a variable, the broadcast information being useable by the mobile station (3) to determine whether or not the mobile station (3) will acquire a timing correction amount of an uplink transmission timing from the base station (2), and the mobile station (3) comprises:

an antenna (115) for receiving the broadcast information broadcast by the base station (2) to a plurality of mobile stations including the mobile station (3) ;

a switching unit configured to determine whether or not to acquire the timing correction amount from the base station (2) for the mobile station (3), the determination being based on the value of the variable contained in the broadcast information broadcast by the base station (2) and received by the mobile station (3) ; and

an uplink transmission timing determining unit configured such that, when the switching unit determines not to acquire the timing correction amount from the base station (2), the uplink transmission timing determining unit sets the timing correction amount to zero or calculates the timing correction amount, wherein the calculation uses the value of the variable contained in the broadcast information.

6. The communication system (1) of claim 5, wherein the broadcast information further comprises resource information which designates a radio resource of an uplink channel upon which the mobile station (3), having determined not to acquire the timing correction amount from the base station (2), can send an uplink signal to the base station (2), and the base station (2) further comprises an uplink signal detecting unit (24) configured to detect the uplink signal from the mobile station (3) transmitted over the designated radio resource.

7. The communication system (1) of claim 5 or 6,
wherein the base station (2) further comprises:

a mobile station detecting unit (29-1) configured to acquire positional information of mobile stations (3) which are connected to the base station (2) ; and

a variable control unit (29-2) configured to use a distribution of distance between the mobile stations (3) and the base station (2) as the basis for variably controlling the value of the variable that is broadcast in the broadcast information.

8. A communication method of a mobile station (3), the method comprising:

receiving broadcast information broadcast by a base station (2) to a plurality of mobile stations including the mobile station (3) ;

determining, by the mobile station (3), whether or not to acquire a timing correction amount from a base station (2) for the mobile station (3), the determination being based on the value of a variable contained in the broadcast information broadcast by the base station (2) and received by the mobile station (3) ; and,

when it is determined not to acquire the timing correction amount from the base station (2), setting the timing correction amount to zero or calculating the timing correction amount, wherein the calculation uses the value of the variable contained in broadcast information which the base station (2) transmits.

9. A communication method, the method comprising:

transmitting broadcast information, from a base station (2) to a plurality of mobile stations including a mobile station (3), the broadcast information including a value of a variable useable by the mobile station (3) to determine whether or not the mobile station (3) will acquire a timing correction amount of an uplink transmission timing from the base station (2) ;

receiving the broadcast information at the mobile station (3),

determining by the mobile station (3) whether or not to acquire the timing correction amount from the base station (2) for the mobile station (3), the determining being based on the value of a variable contained in the broadcast information broadcast by the base station (2) and received by the mobile station (3) ; and

when the mobile station (3)determines not to acquire the timing correction amount from the base station (2), setting the timing correction amount to zero or calculating the timing correction amount, wherein the calculation uses the value of the variable contained in broadcast information which the base station (2) transmits.

**Patentansprüche**

1. Eine Mobilstation (3), umfassend:

eine Antenne (115) zum Empfangen von Rundfunkinformationen, welche durch eine Basisstation (2) an eine Vielzahl von Mobilstationen, umfassend die Mobilstation (3), im Rundfunk ausgestrahlt sind;

eine Schalteinheit, ausgebildet zum Bestimmen, ob ein Timing-Korrekturbetrag eines Uplink-Übertragungs-Timings von einer Basisstation (2) für die Mobilstation (3) zu erfassen ist oder nicht, wobei die Bestimmung auf dem Wert einer in den Rundfunkinformationen, welche durch die Basisstation (2) im Rundfunk ausgestrahlt und durch die Mobilstation (3) empfangen sind, enthaltenen Variablen basiert; und

eine Uplink-Übertragungs-Timing-Bestimmungseinheit, derart ausgebildet, dass, wenn die Schalteinheit bestimmt, dass der Timingkorrekturbetrag von der Basisstation (2) nicht zu erfassen ist, die Uplink-Übertragungs-Timing-Bestimmungseinheit den Timingkorrekturbetrag gleich Null einstellt oder den Timingkorrekturbetrag berechnet, wobei die Berechnung einen Wert einer Variablen verwendet, welche in den Rundfunkinformationen umfasst ist, welche die Basisstation (2) überträgt.

2.  Mobilstation (3) gemäß Anspruch 1, weiter umfassend:

eine Ressourceninformationen-Detektionseinheit, ausgebildet zum Detektieren von Ressourceninformationen, welche in den Rundfunkinformationen enthalten sind, welche eine Uplink-Funk-Ressource bestimmen; und
eine Ressourcenzuordnungseinheit (150), ausgebildet zum Zuordnen einer Funk-Ressource, welche durch die Ressourceninformationen bestimmt ist, zu einem Uplink-Signal, welches übertragen wird, wenn die Schalteinheit bestimmt, dass der Timingkorrekturbetrag von der Basisstation (2) nicht zu erfassen ist.

3.  Mobilstation (3) gemäß einem der Ansprüche 1 oder 2, wobei die Schalteinheit ausgebildet ist zum Bestimmen, ob der Timingkorrekturbetrag von der Basisstation (2) zu erfassen ist oder nicht, unter Verwendung von Informationen über eine Signalausbreitungs-Verzögerungszeit zwischen der Mobilstation (3) und der Basisstation (2), welche durch den Wert der in den Rundfunkinformationen enthaltenen Variablen bestimmt wird.

4.  Mobilstation (3) gemäß einem der Ansprüche 1 oder 2, wobei die Schalteinheit ausgebildet ist zum Bestimmen, ob der Timingkorrekturbetrag von der Basisstation (2) zu erfassen ist oder nicht, unter Verwendung von Informationen über einen Typ der Basisstation (2), welcher durch die in den Rundfunkinformationen enthaltenen Variablen bestimmt wird.

5.  Ein Kommunikationssystem (1), umfassend eine Basisstation (2) und eine Mobilstation (3), wobei
die Basisstation (2) eine Übertragungseinheit (23) umfasst, welche ausgebildet ist zum Übertragen von Rundfunkinformationen an eine Vielzahl von Mobilstationen, umfassend eine Mobilstation (3), wobei die Rundfunkinformationen einen Wert einer Variablen umfassen, wobei die Rundfunkinformationen durch die Mobilstation (3) verwendbar sind, um zu bestimmen, ob die Mobilstation (3) einen Timingkorrekturbetrag eines Uplink-Obertragungs-Timings von der Basisstation (2) erfassen wird oder nicht, und
die Mobilstation (3) umfasst:

eine Antenne (115) zum Empfangen der Rundfunkinformationen, welche durch die Basisstation (2) an eine Vielzahl von Mobilstationen, umfassend die Mobilstation (3), im Rundfunk ausgestrahlt sind;
eine Schalteinheit, ausgebildet zum Bestimmen, ob der Timingkorrekturbetrag von der Basisstation (2) für die Mobilstation (3) zu erfassen ist oder nicht, wobei die Bestimmung auf dem Wert der in den Rundfunkinformationen, welche durch die Basisstation (2) im Rundfunk ausgestrahlt und durch die Mobilstation (3) empfangen werden, enthaltenen Variablen basiert; und
eine Uplink-Übertragungs-Timing-Bestimmungseinheit, derart ausgebildet, dass, wenn die Schalteinheit bestimmt, dass der Timingkorrekturbetrag von der Basisstation (2) nicht zu erfassen ist, die Uplink-Übertragungs-Timing-Bestimmungseinheit den Timingkorrekturbetrag gleich Null einstellt oder den Timingkorrekturbetrag berechnet, wobei die Berechnung den Wert der in den Rundfunkinformationen enthaltenen Variablen verwendet.

6.  Kommunikationssystem (1) gemäß Anspruch 5, wobei die Rundfunkinformationen weiter Ressourceninformationen umfassen, welche eine Funk-Ressource eines Uplink-Kanals bestimmen, auf welchem die Mobilstation (3), welche bestimmt hat, dass der Timingkorrekturbetrag nicht von der Basisstation (2) zu erfassen ist, ein Uplink-Signal an die Basisstation (2) senden kann, und
die Basisstation (2) weiter eine Uplink-Signal-Detektionseinheit (24) umfasst, welche ausgebildet ist zum Detektieren des über die bestimmte Funk-Ressource übertragenen Uplink-Signals von der Mobilstation (3).

7.  Kommunikationssystem (1) gemäß Anspruch 5 oder 6, wobei die Basisstation (2) weiter umfasst:

eine Mobilstation-Detektionseinheit (29-1), ausgebildet zum Erfassen einer Positionsinformation von Mobilstationen (3), welche mit der Basisstation (2) verbunden sind; und

eine Variablensteuereinheit (29-2), ausgebildet zum Verwenden einer Verteilung eines Abstands zwischen den Mobilstationen (3) und der Basisstation (2) als die Basis für ein variables Steuern des Werts der Variablen, welche in den Rundfunkinformationen im Rundfunk ausgestrahlt ist.

8. Ein Kommunikationsverfahren einer Mobilstation (3), wobei das Verfahren umfasst:

Empfangen von Rundfunkinformationen, welche durch eine Basisstation (2) an eine Vielzahl von Mobilstationen, umfassend die Mobilstation (3), im Rundfunk ausgestrahlt werden;
Bestimmen, durch die Mobilstation (3), ob ein Timingkorrekturbetrag von einer Basisstation (2) für die Mobilstation (3) zu erfassen ist oder nicht, wobei die Bestimmung auf dem Wert einer in den Rundfunkinformationen, welche durch die Basisstation (2) im Rundfunk ausgestrahlt und durch die Mobilstation (3) empfangen werden, enthaltenen Variablen basiert; und, wenn bestimmt wird, dass der Timingkorrekturbetrag von der Basisstation (2) nicht zu erfassen ist, Einstellen des Timingkorrekturbetrags auf Null oder Berechnen des Timingkorrekturbetrags, wobei die Berechnung den Wert der in Rundfunkinformationen, welche die Basisstation (2) überträgt, enthaltenen Variablen verwendet.

9. Ein Kommunikationsverfahren, wobei das Verfahren umfasst:

Übertragen von Rundfunkinformationen, von einer Basisstation (2) zu einer Vielzahl von Mobilstationen, umfassend eine Mobilstation (3), wobei die Rundfunkinformationen einen Wert einer Variablen umfassen, welche durch die Mobilstation (3) zum Bestimmen, ob die Mobilstation (3) einen Timingkorrekturbetrag eines Uplink-Übertragungs-Timings von der Basisstation (2) erfassen wird oder nicht, verwendbar ist;
Empfangen der Rundfunkinformationen bei der Mobilstation (3),
Bestimmen, durch die Mobilstation (3), ob der Timingkorrekturbetrag von der Basisstation (2) für die Mobilstation (3) zu erfassen ist oder nicht, wobei das Bestimmen auf dem Wert einer in den Rundfunkinformationen, welche durch die Basisstation (2) im Rundfunk ausgestrahlt und durch die Mobilstation (3) empfangen werden, enthaltenen Variablen basiert; und,
wenn die Mobilstation (3) bestimmt, dass der Timingkorrekturbetrag von der Basisstation (2) nicht zu erfassen ist, Einstellen des Timingkorrekturbetrags auf Null oder Berechnen des Timingkorrekturbetrags, wobei die Berechnung den Wert der Variablen verwendet, welche in den Rundfunkinformationen enthalten ist, welche die Basisstation (2) überträgt.

## Revendications

1. Station mobile (3) comprenant :

une antenne (115) pour recevoir des informations de diffusion diffusées par une station de base (2) à une pluralité de stations mobiles incluant la station mobile (3) ;
une unité de commutation configurée pour déterminer si acquérir ou non une quantité de correction de positionnement temporel d'un positionnement temporel de transmission de liaison montante à partir d'une station de base (2) pour la station mobile (3), la détermination étant basée sur la valeur d'une variable contenue dans les informations de diffusion diffusées par la station de base (2) et reçues par la station mobile (3) ; et
une unité de détermination de positionnement temporel de transmission de liaison montante configurée de sorte que, lorsque l'unité de commutation détermine de ne pas acquérir la quantité de correction de positionnement temporel à partir de la station de base (2), l'unité de détermination de positionnement temporel de transmission de liaison montante établisse la quantité de correction de positionnement temporel à zéro ou calcule la quantité de correction de positionnement temporel, où le calcul utilise une valeur d'une variable qui est incluse dans les informations de diffusion que la station de base (2) transmet.

2. Station mobile (3) selon la revendication 1, comprenant en outre :

une unité de détection d'informations de ressource configurée pour détecter des informations de ressource, contenues dans les informations de diffusion, qui désignent une ressource radio de liaison montante ; et
une unité d'allocation de ressource (150) configurée pour allouer une ressource radio, désignée par les informations de ressource, à un signal de liaison montante transmis lorsque l'unité de commutation détermine de ne pas acquérir la quantité de correction de positionnement temporel à partir de la station de base (2).

**3.** Station mobile (3) selon l'une quelconque des revendications 1 ou 2, dans laquelle l'unité de commutation est configurée pour déterminer si acquérir ou non la quantité de correction de positionnement temporel à partir de la station de base (2) en utilisant des informations sur un temps de retard de propagation de signal entre la station mobile (3) et la station de base (2), qui est spécifié par la valeur de ladite variable contenue dans les informations de diffusion.

**4.** Station mobile (3) selon l'une quelconque des revendications 1 ou 2, dans laquelle l'unité de commutation est configurée pour déterminer si acquérir ou non la quantité de correction de positionnement temporel à partir de la station de base (2) en utilisant des informations sur un type de la station de base (2) qui est spécifié par ladite variable contenue dans les informations de diffusion.

**5.** Système de communication (1) incluant une station de base (2) et une station mobile (3), dans lequel
la station de base (2) comprend une unité de transmission (23) configurée pour transmettre des informations de diffusion à une pluralité de stations mobiles incluant une station mobile (3), les informations de diffusion incluant une valeur d'une variable, les informations de diffusion étant utilisables par la station mobile (3) pour déterminer si la station mobile (3) acquerra ou non une quantité de correction de positionnement temporel d'un positionnement temporel de transmission de liaison montante à partir de la station de base (2), et
la station mobile (3) comprend :

une antenne (115) pour recevoir les informations de diffusion diffusées par la station de base (2) à une pluralité de stations mobiles incluant la station mobile (3) ;
une unité de commutation configurée pour déterminer si acquérir ou non la quantité de correction de positionnement temporel à partir de la station de base (2) pour la station mobile (3), la détermination étant basée sur la valeur de la variable contenue dans les informations de diffusion diffusées par la station de base (2) et reçues par la station mobile (3) ; et
une unité de détermination de positionnement temporel de transmission de liaison montante configurée de sorte que, lorsque l'unité de commutation détermine de ne pas acquérir la quantité de correction de positionnement temporel à partir de la station de base (2), l'unité de détermination de positionnement temporel de transmission de liaison montante établisse la quantité de correction de positionnement temporel à zéro ou calcule la quantité de correction de positionnement temporel, où le calcul utilise la valeur de la variable contenue dans les informations de diffusion.

**6.** Système de communication (1) selon la revendication 5, dans lequel les informations de diffusion comprennent en outre des informations de ressource qui désignent une ressource radio d'un canal de liaison montante sur lequel la station mobile (3), ayant déterminé de ne pas acquérir la quantité de correction de positionnement temporel à partir de la station de base (2), peut envoyer un signal de liaison montante à la station de base (2), et
la station de base (2) comprend en outre une unité de détection de signal de liaison montante (24) configurée pour détecter le signal de liaison montante à partir de la station mobile (3) transmis sur la ressource radio désignée.

**7.** Système de communication (1) selon la revendication 5 ou 6, dans lequel la station de base (2) comprend en outre :

une unité de détection de station mobile (29-1) configurée pour acquérir des informations positionnelles de stations mobiles (3) qui sont connectées à la station de base (2) ; et
une unité de commande variable (29-2) configurée pour utiliser une distribution de distance entre les stations mobiles (3) et la station de base (2) comme la base pour commander de façon variable la valeur de la variable qui est diffusée dans les informations de diffusion.

**8.** Procédé de communication d'une station mobile (3), le procédé comprenant :

la réception d'informations de diffusion diffusées par une station de base (2) à une pluralité de stations mobiles incluant la station mobile (3) ;
la détermination, par la station mobile (3), de si acquérir ou non une quantité de correction de positionnement temporel à partir d'une station de base (2) pour la station mobile (3), la détermination étant basée sur la valeur d'une variable contenue dans les informations de diffusion diffusées par la station de base (2) et reçues par la station mobile (3) ; et
lorsqu'il est déterminé de ne pas acquérir la quantité de correction de positionnement temporel à partir de la station de base (2), l'établissement de la quantité de correction de positionnement temporel à zéro ou le calcul de la quantité de correction de positionnement temporel, où le calcul utilise la valeur de la variable contenue dans des informations de diffusion que la station de base (2) transmet.

9. Procédé de communication, le procédé comprenant :

la transmission d'informations de diffusion, à partir d'une station de base (2) à une pluralité de stations mobiles incluant une station mobile (3), les informations de diffusion incluant une valeur d'une variable utilisable par la station mobile (3) pour déterminer si la station mobile (3) acquerra ou non une quantité de correction de positionnement temporel d'un positionnement temporel de transmission de liaison montante à partir de la station de base (2) ;
la réception des informations de diffusion au niveau de la station mobile (3),
la détermination par la station mobile (3) de si acquérir ou non la quantité de correction de positionnement temporel à partir de la station de base (2) pour la station mobile (3), la détermination étant basée sur la valeur d'une variable contenue dans les informations de diffusion diffusées par la station de base (2) et reçues par la station mobile (3) ; et
lorsque la station mobile (3) détermine de ne pas acquérir la quantité de correction de positionnement temporel à partir de la station de base (2), l'établissement de la quantité de correction de positionnement temporel à zéro ou le calcul de la quantité de correction de positionnement temporel, où le calcul utilise la valeur de la variable contenue dans des informations de diffusion que la station de base (2) transmet.

FIG. 1

(A) | CP | DATA |

(B) | CP | DATA |

t1

(C) | CP | DATA |

t3

(D) | CP | DATA |

t2

FIG. 2

FIG. 3

(A)

0. DOWNLINK PILOT SIGNAL
1. BROADCAST INFORMATION
(CONDITION VARIABLE,
DESIGNATED RESOURCE)

3. FIRST UPLINK SIGNAL

2. JUDGE IF
PREDETERMINED
JUDGMENT
CONDITION
STANDS

2

3

MOBILE
STATION

(B)

0. DOWNLINK PILOT SIGNAL
1. BROADCAST INFORMATION
(CONDITION VARIABLE,
DESIGNATED RESOURCE)

3. REQUEST SIGNAL

4. RESPONSE SIGNAL
(TIMING CORRECTION AMOUNT,
WIRELESS RESOURCE)

5. FIRST UPLINK SIGNAL

2. JUDGE IF
PREDETERMINED
JUDGMENT
CONDITION
STANDS

2

3

MOBILE
STATION

FIG. 4

FIG. 5

## FIG. 6

EP 2 720 500 B1

FIG. 7

FIG. 8

MOBILE STATION $\overset{3}{\frown}$

STORAGE DEVICE $\overset{111}{\frown}$

PROCESSOR $\overset{110}{\frown}$

113

114

DUX

115

RF SIGNAL PROCESSING CIRCUIT

BB PROCESSING CIRCUIT $\overset{112}{\frown}$

TIME INFORMATION ACQUISITION DEVICE $\overset{116}{\frown}$

FIG. 9

EP 2 720 500 B1

## FIG. 10

EP 2 720 500 B1

## FIG. 11

FIG. 12

(A)

Na NUMBER

| MOBILE STATION IDENTIFIER | TEMPORARY MOBILE STATION IDENTIFIER | RESOURCE INFORMATION | MCS |
|---|---|---|---|
| MOBILE STATION IDENTIFIER #1 | TEMPORARY MOBILE STATION IDENTIFIER #1 | RESOURCE INFORMATION #1 | MCS#1 |
| MOBILE STATION IDENTIFIER #2 | TEMPORARY MOBILE STATION IDENTIFIER #2 | RESOURCE INFORMATION #2 | MCS#2 |
| ⋮ | ⋮ | ⋮ | ⋮ |
| MOBILE STATION IDENTIFIER #Na | TEMPORARY MOBILE STATION IDENTIFIER #Na | RESOURCE INFORMATION #Na | MCS#Na |

(B)

| TEMPORARY MOBILE STATION IDENTIFIER | RESOURCE INFORMATION | MCS |
|---|---|---|
| TEMPORARY MOBILE STATION IDENTIFIER #1 | RESOURCE INFORMATION #1 | MCS#1 |

FIG. 13

```
              ┌─────────┐
              │  START  │
              └────┬────┘
                   ↓
   ┌──────────────────────────────────────────┐
   │ ACQUIRE TRANSMISSION TIME tb OF BROADCAST │ ⌒AA
   │ INFORMATION TRANSMITTED FROM BASE STATION │
   │ AS BROADCAST INFORMATION                  │
   └────────────────────┬─────────────────────┘
                        ↓
   ┌──────────────────────────────────────────┐
   │ ACQUIRE RECEPTION TIME tm OF BROADCAST    │ ⌒AB
   │ INFORMATION AT MOBILE STATION             │
   └────────────────────┬─────────────────────┘
                        ↓
        ┌────────────────────────────────┐
        │ CALCULATE PROPAGATION DELAY     │ ⌒AC
        │     trtt=(tm−tb)×2              │
        └────────────────┬───────────────┘
                         ↓
                                    ⌒AD
          N          ◇                    Y
   ┌───────────────  CONDITION(1)SATISFIED?  ───────────────┐
   │                                                        │
   ↓                                                        ↓
 AF⌒                                                        ⌒AE
┌──────────────────┐                         ┌──────────────────┐
│ JUDGMENT CONDITION│                         │ JUDGMENT CONDITION│
│ DOES NOT STAND   │                         │ STANDS           │
└─────────┬────────┘                         └─────────┬────────┘
          │                  ↓                          │
          └─────────────────╳───────────────────────────┘
                            ↓
                       ┌─────────┐
                       │   END   │
                       └─────────┘
```

FIG. 14

(A)

DOWNLINK
RECEPTION
TIMING AT
MOBILE
STATION

UPLINK
TRANSMISSION
TIMING AT
MOBILE
STATION

(B)

DOWNLINK
RECEPTION
TIMING AT
MOBILE
STATION

UPLINK
TRANSMISSION
TIMING AT
MOBILE
STATION

(C)

DOWNLINK
TRANSMISSION
TIMING AT
BASE STATION

UPLINK
RECEPTION
TIMING AT
BASE STATION

DOWNLINK
RECEPTION
TIMING AT
MOBILE
STATION

UPLINK
TRANSMISSION
TIMING AT
MOBILE
STATION

## FIG. 15

```
                    ┌─────────┐
                    │  START  │
                    └────┬────┘
                         ▼
        ┌────────────────────────────────┐
        │  RECEIVE DOWNLINK PILOT SIGNAL  │──BA
        └────────────────┬───────────────┘
                         ▼
        ┌────────────────────────────────┐
        │      ESTIMATE DOWNLINK          │──BB
        │      TRANSMISSION TIMING        │
        └────────────────┬───────────────┘
                         ▼
        ┌────────────────────────────────┐
        │ RECEIVE BROADCAST INFORMATION  │──BC
        │           SIGNAL               │
        └────────────────┬───────────────┘
                         ▼
      BD                ╱╲
        ╲────      ╱         ╲          Y
              ╱  JUDGMENT CONDITION ╲──────────────┐
              ╲      STANDS?        ╱              │
                ╲                ╱                 │
      BG             ╲ N ╱                         │
        ╲───┌─────────▼──────────┐                 │
            │ TRANSMIT REQUEST    │                │
            │      SIGNAL         │                │
            └─────────┬──────────┘                 │
                      ▼                            │
            ┌─────────────────────┐──BH            │
            │ RECEIVE RESPONSE     │               │
            │      SIGNAL          │               │
            └─────────┬──────────┘                 │
                      ▼        BI                  ▼                      BE
        ┌─────────────────────┐      ┌──────────────────────────────┐
        │ ADJUST TRANSMISSION  │      │  ADJUST TRANSMISSION TIMING  │
        │      TIMING          │      └───────────────┬──────────────┘
        └─────────┬──────────┘                        ▼
                  ▼                       ┌──────────────────────────────┐
        ┌─────────────────────┐          │    SELECT TRANSMISSION        │
        │ SELECT TRANSMISSION  │          │      RESOURCE                 │
        │  RESOURCE (PUSCH)    │          │  (DESIGNATED RESOURCE)        │
        └─────────┬──────────┘           └───────────────┬──────────────┘
      BJ          ▼                                        BF
        ┌──────────────────────────┐──BK
        │ TRANSMIT FIRST UPLINK     │
        │      SIGNAL               │
        └─────────┬────────────────┘
                  ▼          BM
                 ╱╲
               ╱    ╲                   N   ┌──────────────────────────┐
             ╱ ACKNOWLEDGE ╲─────────────── │ REPEAT FIRST UPLINK      │
             ╲  RECEIVED?  ╱                │      SIGNAL              │
               ╲        ╱                   └──────────────────────────┘
                 ╲ Y ╱                                  BL
                  ▼
              ┌───────┐
              │  END  │
              └───────┘
```

FIG. 16

START

TRANSMIT DOWNLINK PILOT SIGNAL — CA

TRANSMIT BROADCAST
INFORMATION SIGNAL — CB

CC — REQUEST SIGNAL
RECEIVED? — N

CD — TRANSMIT RESPONSE SIGNAL

Y

CF — FIRST
UPLINK SIGNAL
RECEIVED OVER DESIGNATED
RESOURCE? — N

CE — FIRST UPLINK SIGNAL
RECEIVED OVER PUSCH? — N

Y

CG — RECEPTION
SUCCESSFUL? — N

CH — TRANSMIT NEGATIVE
ACKNOWLEDGE

Y

CJ — TRANSMIT ACKNOWLEDGE

RECEIVE FIRST
UPLINK SIGNAL — CI

END

# FIG. 17

BASE
STATION

MOBILE
STATION

DOWNLINK PILOT SIGNAL    DA

DB

ESTIMATE DOWNLINK
RECEPTION TIMING

BROADCAST INFORMATION    DC

DD

ADJUST UPLINK
TRANSMISSION TIMING

FIRST UPLINK SIGNAL    DE

ACKNOWLEDGE SIGNAL    DF

# FIG. 18

BASE
STATION

MOBILE
STATION

DOWNLINK PILOT SIGNAL — EA

EB

ESTIMATE DOWNLINK
RECEPTION TIMING

BROADCAST INFORMATION — EC

REQUEST SIGNAL — ED

RESPONSE SIGNAL — EE

EF

ADJUST UPLINK
TRANSMISSION TIMING

FIRST UPLINK SIGNAL — EG

ACKNOWLEDGE SIGNAL — EH

FIG. 19

START

ACQUIRE TRANSMISSION POWER Pb
OF DOWNLINK PILOT SIGNAL — FA

TRANSMIT TRANSMISSION POWER
INFORMATION TO MOBILE STATION — FB

ACQUIRE RECEPTION POWER Pm
OF DOWNLINK PILOT SIGNAL — FC

CALCUALTE PATH LOSS
L=Pb-Pm — FD

CONVERT PATH LOSS L TO DISTANCE R
FROM BASE STATION TO MOBILE STATION — FE

ROUND-TRIP
PROPAGATION DELAY
trtt=(R/v)×2 — FF

END

FIG. 20

START

TRANSMIT CELL RADIUS "r"
TO MOBILE STATION — GA

CALCULATE PROPAGATION DELAY
$trtt=(r/v) \times 2$ — GB

END

## FIG. 21

BASE STATION — 2

- HIGHER LAYER PROTOCOL PROCESSING UNIT — 20
- DOWNLINK SIGNAL PROCESSING UNIT — 21
- DOWNLINK BB PROCESSING UNIT — 22
- RADIO TRANSMITTING UNIT — 23
- DUX
- 15
- UPLINK SIGNAL PROCESSING UNIT — 26
- UPLINK BB PROCESSING UNIT — 25
- RADIO RECEIVING UNIT — 24
- 14
- SCHEDULER — 27
- TIME ACQUIRING UNIT — 28
- MOBILE STATION DETECTING UNIT — 29-1
- CORRECTION COEFFICIENT DETERMINING UNIT — 29-2

EP 2 720 500 B1

(A)

NUMBER N1[D] OF MOBILE STATIONS PRESENT AT POSITION OF DISTANCE D

DISTANCE D

FIG. 22

(B)

NUMBER N2[D] OF MOBILE STATIONS PRESENT WITHIN DISTANCE D

DISTANCE D

# FIG. 23

```
        ( START )
            │
            ▼
┌────────────────────────────┐
│   PREPARE HISTOGRAM OF      │── HA
│  NUMBER OF MOBILE STATIONS  │
└────────────────────────────┘
            │
            ▼
┌─────────────────────────────────────────┐
│ DETERMINE CUMULATIVE FREQUENCY DISTRIBUTION │── HB
│ N2[D] OF NUMBER OF MOBILE STATIONS        │
└─────────────────────────────────────────┘
            │
            ▼
      ┌──────────┐
      │   d=0    │── HC
      └──────────┘
            │
            ▼
     HD ╱────────────╲           Y
       ╱  Na × β      ╲──────────────┐
       ╲  <N2[d]?     ╱              │
        ╲────────────╱               │
            │ N                      │
            ▼                        │
      ┌──────────┐                   │
      │ d=d+Δd   │── HE              │
      └──────────┘                   │
            │                        │
            ▼                        │
┌────────────────────────────────┐  │
│ CALCULATE CORRECTION COEFFICIENT α │── HF
│   α = (d × 2) / (v × tcp)       │
└────────────────────────────────┘
            │
            ▼
┌────────────────────────────────┐
│ TRANSMIT CORRECTION COEFFICIENT α │── HG
│ TO MOBILE STATION              │
└────────────────────────────────┘
            │
            ▼
        ( END )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010161804 A
- JP 2009020213 A
- JP 2008526094 A
- EP 2124375 A1

**Non-patent literature cited in the description**

- *3GPP TS 36.321, V8.9.0,* June 2010